# EUROPEAN PATENT SPECIFICATION

(11) **EP 1 315 349 B1**
(45) Date of publication and mention of the grant of the patent: **19.03.2008**
(21) Application number: 01127748.0
(22) Date of filing: 21.11.2001
(51) Int. Cl.: H04L 29/06

(54) **A method for integrating with load balancers in a client and server system**
Verfahren um einen Lastverteiler in ein Client- Server- System zu integrieren
Méthode d'intégration de distribution de charge dans un système client-serveur

(43) Date of publication of application: 28.05.2003
(73) Proprietor: SUN MICROSYSTEMS, INC., Palo Alto, California 94303 (US)
(72) Inventor: Laux, Thorsten, O., 20099 Hamburg (DE); Chernoivanov, Dennis, 22117 Hamburg (DE); Pfohe, Thomas, 22143 Hamburg (DE)
(74) Representative: HOFFMANN EITLE

(56) References cited:
- EP-A- 1 049 307
- WO-A-01/18641
- ANEROUSIS N ET AL: "Service Level Routing on the internet" GLOBAL TELECOMMUNICATIONS CONFERENCE GLOBECOMM'99, IEEE, 1999, pages 553-559, XP010373614 Rio de Janero, Brasil
- CHU-SING YANG ET AL: "An effective mechanism for supporting content-based routing in scalable Web server clusters" PARALLEL PROCESSING, 1999. PROCEEDINGS. 1999 INTERNATIONAL WORKSHOPS ON AIZU-WAKAMATSU, JAPAN 21-24 SEPT. 1999, LOS ALAMITOS, CA, USA,IEEE, US, 21 September 1999 (1999-09-21), pages 240-245, XP010356089 ISBN: 0-7695-0353-5

## Description

### FIELD OF THE INVENTION

The invention relates to a client unit, a server unit, a load balancer and a method in a data processing system in which content data from a plurality of server units are provided to a plurality of client units in response to content data requests issued by the client unit. In particular, the invention desires to provide a mechanism by which a communication between a particular client unit and a particular server unit can be maintained despite the load balancing function of the load balancer, for example when the client unit requests a service or data only from a service provided in a special server unit.

### BACKGROUND OF THE INVENTION

Anerousis N. et al: "Service Level Routing on the Internet", Global Telecommunications Conference Globecomm '99, IEEE, 1999, pages 553-559 describes a service level routing scheme for the Internet wherein connections to hosts are directed to a service level router and then routed to an appropriate server host using multiple levels of tunnelling. Once a flow has been identified, the service level router may be shortcut.

To route a flow to a server, the routing is performed on a service level, wherein each service is associated with an IP address of a virtual host that provides the service. The virtual host has a single IP address but can correspond to different physical hosts. In operation, packets for a virtual host are first identified by a service level router and the packets are then directed to the service level router of a particular hosting site using a tunnel. The service level router at the hosting site further tunnels data packets to the host that is best suited for serving the request. A server host terminating the tunnel recovers the original data exactly as they were sent from the client, and the replies are transmitted to the requesting user client, the address of the user client being recovered from the received data. The address of the virtual host is used in the reply as the source address.

EP 1 049 307 A describes a method for dispatching client sessions within a cluster of servers wherein load balancing of client transactions is preserved for the whole duration of a client session. Only the initial request for each client session is transmitted to a site load balancer, all subsequent requests from a client are forwarded to the server first selected, so that the session cannot be later broken by the load balancer.

A client initial request may be received by a load balancer, and a particular server among a plurality of servers may be selected from the load balancer. The initial request is then transmitted to the selected server and a response is issued from the selected server towards the client, uniquely referencing the selected server. All subsequent requests from the client are then forwarded to the uniquely referenced server.

Chu-Sing Yang et al: "An effective mechanism for supporting content-based routing in scalable Web server clusters", Parallel Processing, 1999, Proceedings, 1999, International Workshops on Aizu-Wakamatsu, Japan 21-24 Sept. 1999, Los Alamitos, CA, USA, IEEE, US, 21 September 1999, pages 240-245 describes content-based routing in web server clusters, wherein the content of a request is considered when making a routing decision. A cluster table is provided having entries representing a back end server in the server cluster. The cluster table includes an IP address of a back end server, a load index, and an available connection list.

Further, a distributor maintains and manipulates the mapping table for directing a request to a selected server. Each entry in the mapping table is indexed by a source IP address and a source port of a client, and also includes an IP address and port number of a selected server.

Computers have been conveniently used for a wide range of applications, e.g. ranging from simple editing of text documents to complex distributed processing applications involving a large number of possibly distributed data processing units and involving the transfer of data between the data processing units.

With the growing number of data processing units having access to computer networks such as to local area networks or world-wide networks, e.g. company-wide intranets or the Internet, a growing number of applications is offered to costumers which use a plurality of data processing units. Such applications may be, for example, found in the field of home banking, office applications, remote e-mail applications, supercomputing applications or similar. In such data communication systems, high speed links, via permanent connections, circuit-switched connections or packet-switched connections, are used as a communication link to exchange digital data at high speed (and high-bit rates) such that even graphics data or data from moving images can be exchanged among the data processing units.

It is a typical feature in such data communications systems that there is no requirement that all participating data processing units have the same powerful processing capabilities. That is, a main computer having powerful computing facilities can serve a number of smaller sub-computers through one or more of the above described communication links. Since typically the smaller sub-computers are only assigned the task of making access to a main computer and to request the processing facilities or data from the main computer whilst the main computer itself serves the data on the small sub-computers, the main computer is often referred to as a server (or server unit) and the small sub-computers are referred to as clients (or client units). In such a scenario a client may typically request the execution of an application program at the server unit and may receive a data processing result or content data from the server unit via the network or the communication link connecting the client unit and the server unit.

Furthermore, systems are known where a plurality of client units can connect to a so-called portal for the execution of an application. A portal may be a large site in a network including a plurality of server units which provide a variety of services, including for example, office applications, searching functions, news functions, e-mail applications, discussion groups, on-line shopping and links to other sites on the network, for example through back end tunneling. A portal may thus be a general purpose site offering the capability to perform applications on behalf of a client or assisting a client in executing the application.

Generally, in a client and server or portal scenario the server may be a large computing device which has also the resources to store and execute application programs which are used in providing special services to a client unit. Since the applications and sufficient computing power are generally available at the server side, the client unit may be a data processing unit with less powerful computing resources, functioning as an interface to receive user commands required for the execution of a desired application program when providing the request, i.e. to transmit commands from the client unit to the server, and further to receive and, for example, to display computation results from the server.

### CONVENTIONAL SERVER AND CLIENT CONFIGURATION

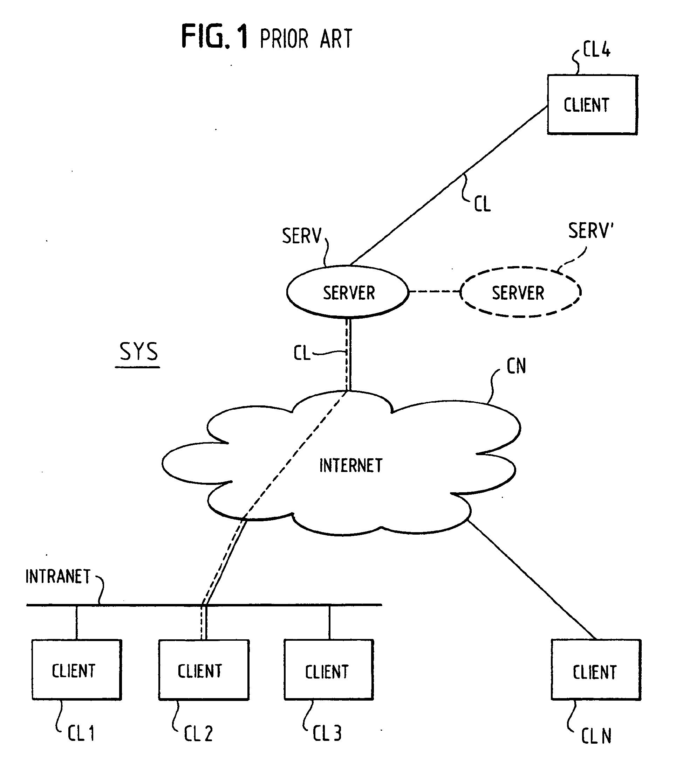

A typical data communication system SYS of the prior art is shown in Fig. 1. Here, a server unit SERV and client units CL1, CL2, CL3, CL4, . . ., CLN communicate through communication links CL, generally set up through a communication network CN, for example an intranet and/or the Internet. Fig. 1 shows with the dashed lines also the possibility of using an additional server SERV' which can communicate with the server SERV. For example, despite the fact that a request from the client unit CL2 is received at server SERV, the actual data provision may be performed by the server SERV' which communicates with the server SERV, for example through a back end tunnel.

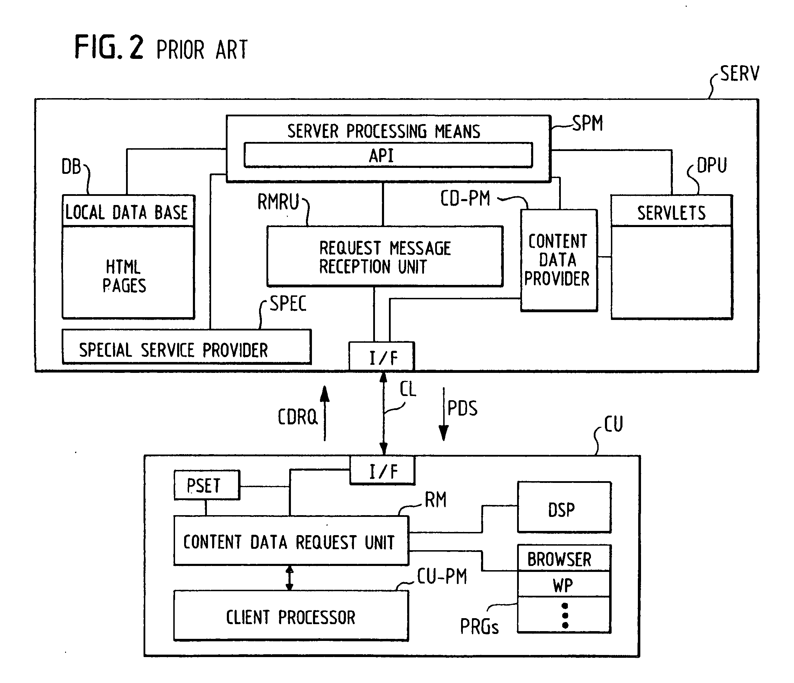

Fig. 2 shows a typical block diagram of a server unit SERV and a client unit CU in accordance with the prior art. The server unit SERV and the client unit CU communicate through a communication link CL connected to a respective interface I/F in the server unit SERV and the client unit CU.

Typically, the client unit CU comprises a content data request unit RM, a client processor CU-PM and a number of programs PRGs, for example, a content data requesting unit in the form of a browser. Furthermore, the client unit can comprise a display DSP and a page setting unit PSET.

Typically, the server unit SERV comprises a request message receiving unit RMRU, a server processing unit SPM including an Application Programming Interface API, some data processing units DPU (if the server unit is a JAVA^{®} based server (JAVA^{®} is a registered trademark of Sun Microsystems, Inc) these data processing units DPU are for example servlets or JAVAserver pages), a content data providing unit CD-PM, a local database DB, where the content data e.g. HTML pages, are stored, and a special service provider SPEC which can provide a special service only available on this server SERV. For example in Fig. 1, only the server unit SERV may comprise such a special service provider SPEC whilst the server unit SERV' does not comprise this special service provider SPEC.

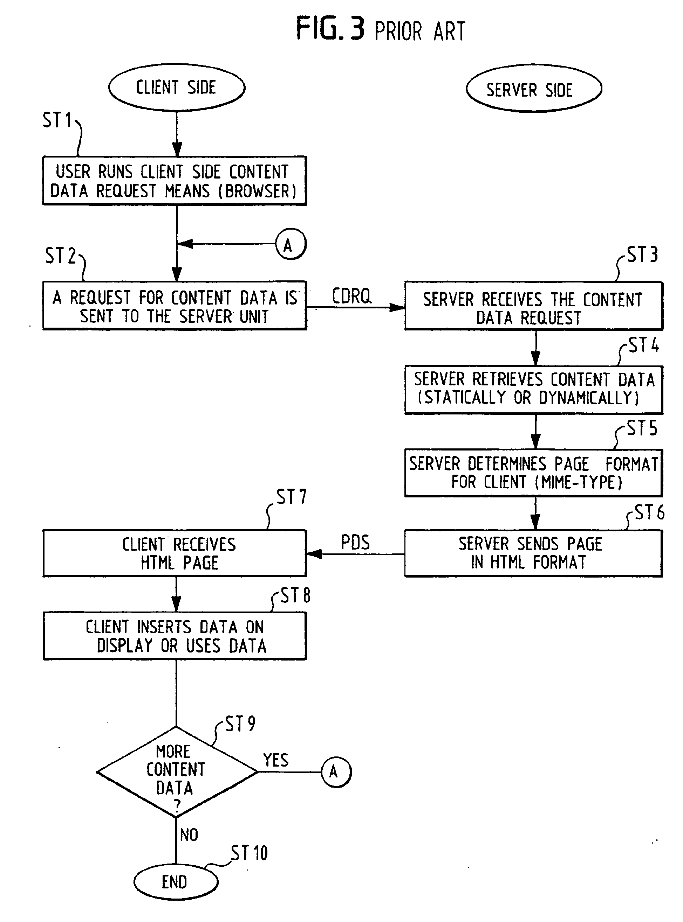

Fig. 3 shows an example of operations typically carried out by the client side and the server side for the typical scenario in Fig. 1.

### CONVENTIONAL REQUEST/PROVISION OF CONTENT DATA

For example, in case a user at a client side wishes to access a document from the server unit SERV, e.g. a web-page available at the server or at another location, the user selects in operation ST1 one of the programs PGs, e.g. a particular browser, which is run on the client processor PU-PM. When the user clicks on a particular place on the screen, a content data request unit RM sends a content data request CDRQ to the server unit SERV in operation ST2. In the Internet protocol, such a request message CDRQ can typically be a HTPP message requesting the transfer of HTML-pages from a database DB located within the server SERV (or located elsewhere outside the server). The HTTP-request message includes the URL from which the HTML-pages should be retrieved and some additional header information.

After setting up the communication link CL between the client unit CU and the server unit SERV, the request message reception unit RMRU on the server side receives the content data request message CDRQ in the operation ST3. Alternatively, the client unit CU can also request the execution of some processing programs DPU, so-called servlets, from the server unit SERV.

In the operation ST4 the server processing unit SPM together with the content data providing unit CD-PM statically or dynamically retrieves the requested content data, e.g. the HTML-pages. In a static retrieval, the server processing unit SPM merely accesses a local database DB and retrieves the HTML-pages. In a dynamic retrieval the server processing unit SPM can run additional programs, for example, the servlets, in order to retrieve or generate data also from a remote site in a dynamic manner, for example from the additional server SERV' shown in Fig. 1. For these operations the Application Programming Interface API is used for the coordination which of the servlets are used. After the operation ST4 an operation ST5 follows in which the page format for the client is determined (the MIME-Type).

In the operation ST6 the content data providing unit CD-PM of the server unit SERV provides through the communication link CL the retrieved or generated content data, i.e. an instruction data set to the client unit. In the operation ST7, the content data or the instruction data set is received on the client side and in the operation ST8 the user at the client side has the option to display or print out the transferred content data on a display DSP, on a disc or a printer. If the requested content data are web-pages (HTML-pages), typically complete data sets relating to one page are requested and re-transferred to the client side. Therefore, if in the operation ST9 the user requires further pages, i.e. data sets, from the server unit, the process continues with the operation ST2. If no further pages are required, the link is closed after some time, for example, by stopping the browser in the operation ST10.

As explained above, in the operation ST4 the server SERV which has first received the content data request in the operation ST3 attempts to retrieve or generate the desired content data statically or dynamically. For example, if the server unit SERV is to retrieve or generate content data from a special service contained in a special service provider SPEC of the server unit SERV, then the content data can be generated "locally", i.e. by the first addressed server unit SERV. However, typically the desired content data, for example from a special service provider SPEC, resides elsewhere in the network, for example at the additional server SERV'. In this case, the dynamic retrieval and generation of content data is used, i.e. the first addressed server SERV must communicate with the additional server SERV' before being capable to return the content data in the operation ST6 to the client unit CU.

Indeed, the scenario of requesting and providing content data would be quite simple if the content data request message CDRQ could always be sent directly to the server unit SERV at which the special service provider SPEC resides because in this case the server unit SERV would not have to communicate with other servers SERV'. On the other hand, this would to some extend jeopardize the whole effort, i.e. the client unit CU should merely send a content data request CDRQ to the server network without having to know specifically where the special services provider SPEC resides. That is, as far as the client unit CU is concerned, it does not matter which server unit SERV actually provides the special service SPEC as long as it is guaranteed that the requested content data is returned in the message PDS from the server network.

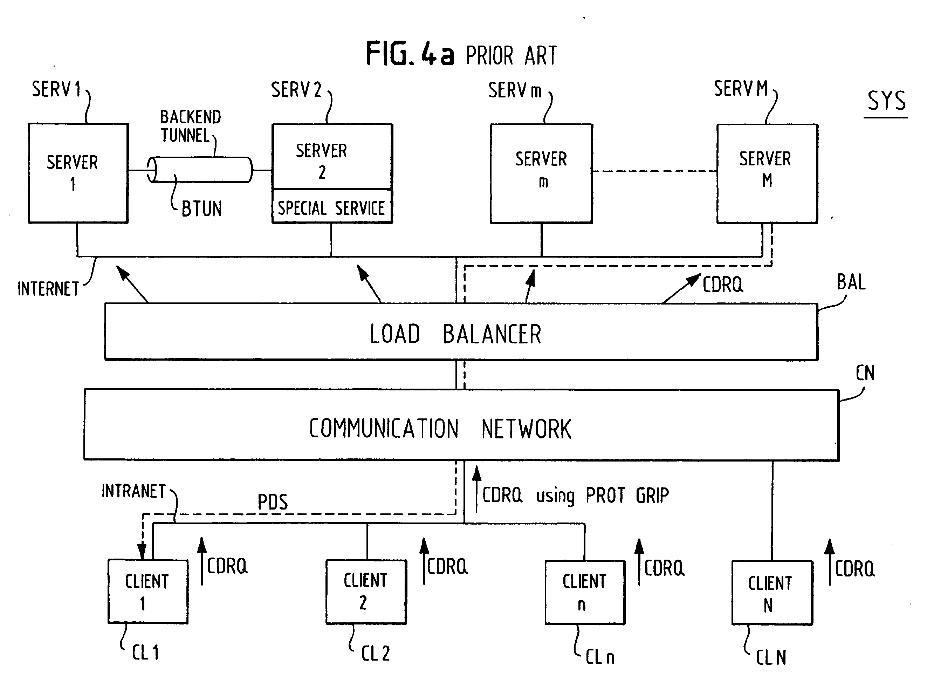

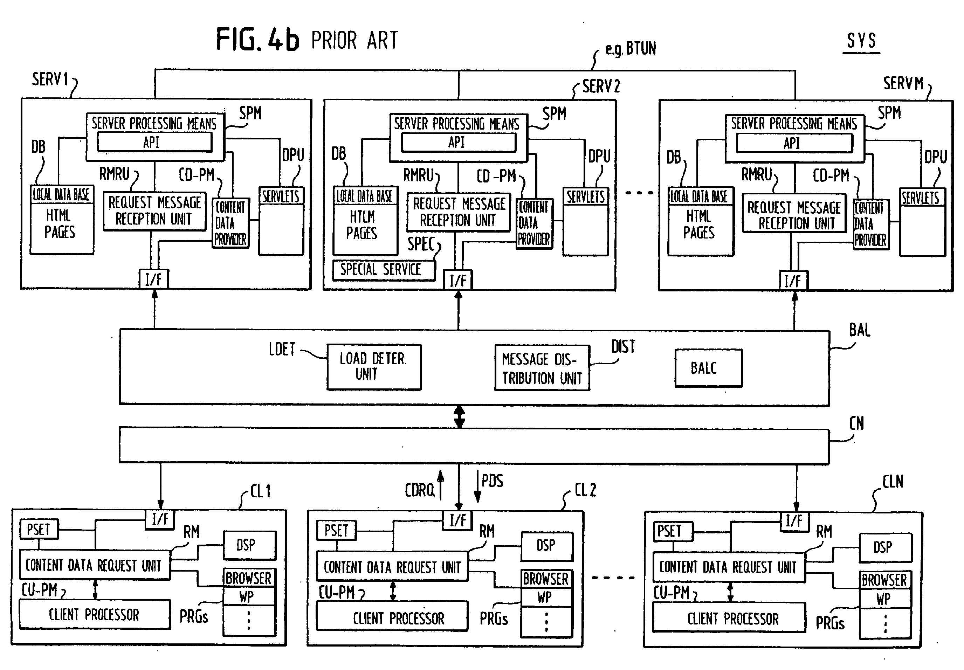

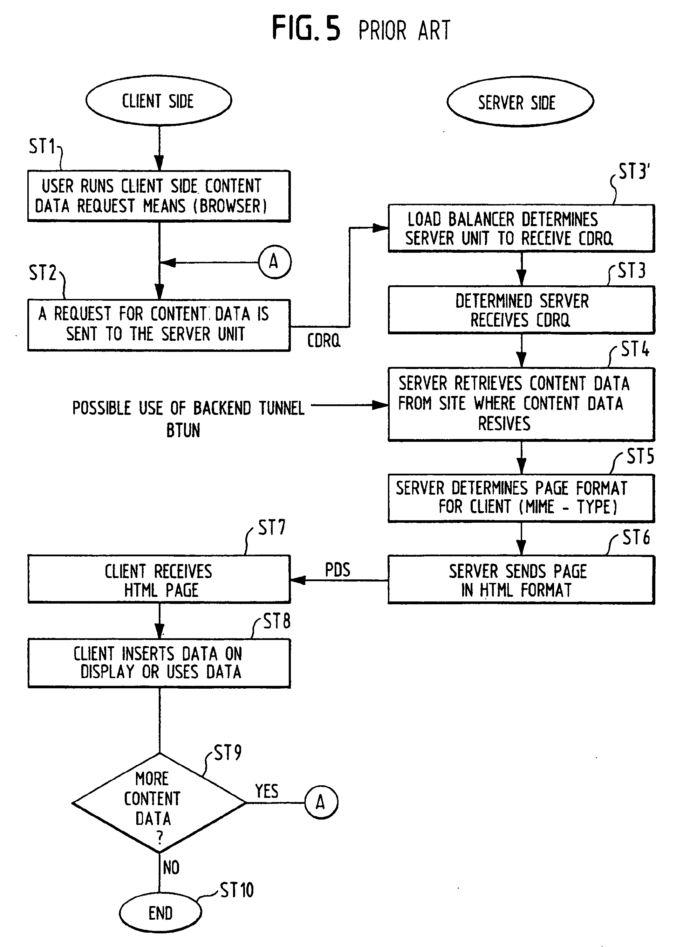

On the other hand, if the content data request messages CDRQ and the content data provision message PDS are implemented in a proprietary protocol, the content data request message CDRQ may indeed comprise a so-called user field which contains a user identification and the type of special service to be provided. If competitive content data requests CDRQ to the same special service provider SPEC are issued by the client unit CU, of course it would be desirable if all such content data requests CDRQ could be routed to the same server unit SERV providing the special service SPEC. The reason why this is not possible in a standard implementation is the use of a load balancer BAL as shown in Fig. 4a, and Fig. 4b and Fig. 5.

### USE OF A LOAD BALANCER FOR ROUTING MESSAGES

The single client unit CU single server unit SERV scenario of Fig. 2 is illustrated for a plurality of client units CL1, CL2, CLn, CLN; SERV1, SERV2, SERVm, SERVM in Fig. 4b and Fig. 4a shows a more general block diagram.

Typically, in Fig. 4a, the content data request messages CDRQ are routed through the communication network CN to a load balancer BAL. The load balancer BAL then distributes the content data requests CDRQ to individual servers of the server network. In Fig. 4a and Fig. 4b the communication network CN is only for illustration shown between the client units CL and the load balancer BAL. However, it should be understood that of course the communication network CN may also have parts existing between the load balancer BL and the servers SERV1, SERV2, SERVm, SERVM.

The load balancer BAL comprises a load determining unit LDET, a message distribution unit DIST and a balancer control unit BALC. The load determining LDET can determine the processing load at each server unit and the load distribution unit DEST distributes the content data requests CDRQ from the plurality of client units CL to the plurality of server units SERV dependent on the processing loads of said individual server units, controlled by the control unit BALC.

Thus, considering that in a large data processing system SYS a large number of client units CL and a large number of server units SERV communicate through the exchange of request and provision messages, the use of a load balancer BAL is invariably necessary because otherwise server units could be overloaded (overfloaded) with content request messages and this would cause a delay in the response times. Therefore, even if a special content data request CDRQ, for example a content data request CDRQ issued from the client unit CL2, indeed desires content data only from the special service SPEC in the server unit SERV2, this content data request CDRQ may be routed to the server unit SERV1 because this server unit SERV1 may have a smaller current processing load. In this case a back end tunnel BTUN my be established between the server unit SERV1 and the server unit SERV2 to retrieve the content data from the special service SPEC in the server unit SERV2. However, it is the server unit SERV1 which will return the requested content data to the client unit CL2.

Therefore, in the typical configuration as shown in Fig. 4b for the use of a load balancer BAL, the operations in Fig. 3 are extended in the flow chart in Fig. 5 with the operation ST3 in which the load balancer BAL determines the server unit which is to receive the content data request CDRQ in accordance with the processing load. In the operation ST3 the determined server receives the issued content data request CDRQ and in the operation ST4 the determined server retrieves the content data from the site, namely from SERV2, where the desired (special) content data resides. As illustrated in Fig. 5 the operation ST4 also entails the possible use of the back end tunnel BTUN for retrieving the content data from other server units.

### DISADVATAGES OF THE USE OF THE LOAD BALANCER

From the above description the use of a load balancer BAL with its load distribution function appears to be quite advantageous because particular server units will not be overloaded with request messages if a plurality of client units simultaneously issue such content data requests CDRQ. This may be the case if for example the request messages CDRQ are already implemented in a communication protocol which in fact does not care about the fact which server unit will eventually return the content data. For example, if the request message CDRQ is a HTTP message requesting the transfer of HTML-pages from a database DB located within a server SERV, this HTTP-request message may indeed contain the URL from which the HTML-pages should be retrieved. By using the URL the data will still be retrieved from the correct site. However, as a result of the use of a load balancer BAL the message may still be diverted to another server, e.g. to SERV1 in Fig. 4a.

On the other hand, client units (and server units) may run a communication protocol implementation which specifies that traffic (such as content data requests) for the same user (the same client unit) will also be sent to the same host (server unit). In such a communication protocol implementation, for example portalconnect® (trademark by Sun Microsystems) as a proprietary protocol, the content data request messages CDRQ will contain a user field including identification information of the user and/or client unit and an identification of the special service SPEC from which content data is to be retrieved. Another protocol used for this purpose is GRIP® (registered trademark by Sun Microsystems, Inc.), namely Generic Interconnection Protocol.

However, the load balancers generally do not allow for the detection of such a user field transmitted in the data stream and therefore the load balancers can not direct the traffic to the desired host and instead the tunneling on the server back end, as illustrated in Fig. 4a, is necessary.

Therefore, when trying to use regular load balancers with products that contain certain restrictions as to the balancing strategies that may be used for them, it is often difficult or impossible to find a way to configure the load balancers accordingly. That is, if there exists the desire that all traffic from a particular client unit will be directed to one particular server unit, the load balancer BAL - which normally provides the advantages of an even load distribution among the server units - will counteract the whole purpose because the load balancer will only aim at an even load distribution and not at the routing of particular messages to particular server units.

As explained above, whilst the use of a load balancer BAL in a data processing system SYS is advantageous in balancing the processing load at a plurality of server units, a load balancer will always distribute content data request messages to server units depending on the processing load, even if the client unit desires that all content data request messages CDRQ are to be routed to the same host, namely to a server unit where for example a special service SPEC is available.

### SUMMARY OF THE INVENTION

It is therefore object of the present invention to provide in a client/server system using load balancers a method and a load balancer for providing content data from a plurality of server units to a plurality of client units in response to content data requests, which guarantee that all content data request messages from a particular client unit are always directly distributed to the particular server unit at which a special desired service for content data retrieval and/or generation resides.

This object is solved by the method according to claim 1, the load balancer according to claim 7, the client unit according to claim 10, and the server unit according to claim 14. Advantageous embodiments are described in the dependent claims.

One example is a mechanism with which it is ensured that a data exchange takes place only between a particular client unit and a particular server unit without the distribution of in particular the content data request messages to other server units.

One example is the setting up of a tunnel between the client unit and the server unit wherein the tunnel encapsulates the message exchange between the requesting client unit and the providing server unit. Thus, the content data requests and the corresponding content data provision messages are exchanged encapsulated through the tunnel whilst other request messages and provision messages relating to other client units and other server units may still undergo a load distribution function at a load balancer.

Another example of a mechanism is that the load balancing function of the load balancer is switched off for content data request messages which are to be routed always to the same server unit. Since the load balancing function is not used for such content data request messages a direct message exchange like in a tunnel between a particular client unit and a particular server unit is achieved.

Another example of a mechanism is that the message exchange between the client units and the server units implemented in a first communication protocol is encapsulated or transformed in a second communication protocol which allows a detection of the user field of content data request messages. This way a load balancer that supports balancing of e.g. HTTP will be able to detect the user field of the content data request messages. For example, the user identification in the user field can be used in the way that HTTP usually reflects the session that is by sending a cookie or a rewriting URLs. In this manner, the balancing restriction can be fulfilled and using this architecture common load balancer features can be relied upon to keep session to one host to ensure that the traffic for one user gets directed to the same host even acroos web-top sessions. For example, if a proprietary protocol like portalconnect® (portalconnect® is a registered trademark of Sun Microsystems, Inc.) includes content data request messages indicating that always the same host is to be reached for traffic from a particular client unit, then the transformation (encapsulation) of portalconnect® into HTTP as a second communication protocol allows to route all messages always to the same server unit because portalconnect® is tunnelled via HTTP. Thus, the user ID is used in the way that HTTP usually reflects the session.

Examples which are directed to the aspect that a special message exchange is encapsulated in a tunnel and that the load balancer handles the rest of the message exchange in a standard manner are listed below.

One example is a method for providing in a data processing system content data from a plurality of server units to a plurality of client units in response to content data requests, comprising the following: sending content data requests from said client units to a load balancer of said data processing system; determining at said load balancer the current processing load at each server unit; distributing, by said load balancer, the content data requests to the server units, dependent on the determined processing loads; retrieving content data by said server units in accordance with the distributed content data requests; and forwarding the retrieved content data from said server units to the respective client units; wherein when a client unit sends a content data request requesting content data to be provided by a service available at a server unit, the following operations are carried out: setting up a tunnel between the requesting client unit and the server unit at which said service is available; forwarding all content data requests from said client unit requesting said content data from said service to said server unit encapsulated through said tunnel without being distributed by said load balancer; and forwarding the content data provided by said service of said server unit to said requesting client unit (encapsulated through said tunnel.

Another example is a client unit of a data processing system for providing content data from a plurality of server units to a plurality of client units in response to content data requests, comprising: a content data request unit adapted to send a content data request requesting content data from a server unit from said client unit to a load balancer of said data processing system which determines the current processing load at each server unit, said load balancer distributing, in accordance with the determined processing load, said content data request to one of said server units for having the content data retrieved from said server unit; a tunneling unit (for maintaining a tunnel link between said client unit and said server unit; a content data reception unit for receiving said requested content data in response to said content data request; wherein said content data request unit is adapted for encapsulating all content data requests requesting said content data from said server unit through said tunnel link to said server unit; and said content data reception unit is adapted for receiving all said content data encapsulated through said tunnel link from said server unit.

Another example is a server unit of a data processing system for providing content data to a plurality of client units in response to content data requests issued by said client units, comprising: a request message reception unit for receiving a content data request requesting content data from said server unit from a load balancer of said data processing system which determines the current processing load at each server unit, said load balancer distributing, in accordance with the determined processing load, said content data request to one of said server units for having the content data retrieved from said server unit; a tunneling unit for maintaining a tunnel link between said requesting client unit and said server unit; a content data providing unit for providing said requested content data to said requesting client unit in response to said content data request; wherein said content data providing unit is adapted for encapsulating all content data providing messages through said tunnel link to said requesting client unit; and said content data request reception unit is adapted for receiving all said content data requests encapsulated through said tunnel link from said requesting client unit.

Another example is a method at a client unit of a data processing system for providing content data from a plurality of server units to a plurality of client units in response to content data requests, comprising the following operations: sending a content data request requesting content data from a client unit to a load balancer of said data processing system which carries out the operation to determine the current processing load at each server unit, said load balancer carrying out the operation to distribute, in accordance with the determined processing load, said content data request to one of said server units for having the content data retrieved from said server unit; maintaining a tunnel link between said client unit and said server unit; receiving by a content data reception unit said requested content data in response to said content data request; and encapsulating all content data requests requesting said content data from said server unit through said tunnel link to said server unit; and receiving all said content data encapsulated through said tunnel link from said server unit.

Another example is a method at a server unit of a data processing system for providing content data to a plurality of client units in response to content data requests issued by said client units, comprising the operations of: receiving a content data request requesting content data from said server unit from a load balancer of said data processing system which determines the current processing load at each server unit, said load balancer carrying out the operation to distribute, in accordance with the determined processing load, said content data request to one of said server units for having the content data retrieved from said server unit; maintaining a tunnel link between said requesting client unit and said server unit; providing said requested content data to said requesting client unit in response to said content data request; encapsulating all content data providing messages through said tunnel link to said requesting client unit; and receiving all said content data requests encapsulated through said tunnel link from said requesting client unit.

Other examples which are directed only to the encapsulation of the special message exchange in a tunnel without mentioning the use of a load balancer for the other message exchange, are listed below.

One example is a method for providing in a data processing system content data response messages containing content data from a plurality of server units to a plurality of client units in response to content data requests provided by said client units, comprising the operations of setting up a tunnel between said requesting client unit and said providing server unit and encapsulating the message exchange between said requesting client unit and said providing server unit in said tunnel.

Another example is a client unit of a data processing system for providing content data from a plurality of server units to a plurality of client units in response to content data requests, comprising: a content data request unit adapted to send a content data request requesting content data from a server unit from said client unit to a server unit; a tunneling unit for maintaining a tunnel link between said client unit and said server unit; a content data reception unit for receiving said requested content data in response to said content data request; wherein said content data request unit is adapted for encapsulating all content data requests requesting said content data from said server unit through said tunnel link to said server unit; and said content data reception unit is adapted for receiving all said content data encapsulated through said tunnel link from said server unit.

Another example is a server unit of a data processing system for providing content data to a plurality of client units in response to content data requests, comprising: a content data request message reception unit for receiving a content data request requesting content data from said server unit from a client unit; a tunneling unit for maintaining a tunnel link between said requesting client unit and said server unit; a content data providing unit for providing said requested content data to said requesting client unit in response to said content data request; wherein said content data providing unit is adapted for encapsulating all content data providing messages through said tunnel link to said requesting client unit; and
said content data request reception unit is adapted for receiving all said content data requests encapsulated through said tunnel link from said requesting client unit.

Another example is a method at a client unit of a data processing system for providing content data from a plurality of server units to a plurality of client units in response to content data requests, comprising the following operations: sending a content data request requesting content data.from a server unit from said client unit to a server unit; maintaining a tunnel link between said client unit and said server unit; receiving said requested content data in response to said content data request; and encapsulating all content data requests requesting said content data from said server unit through said tunnel link to said server unit; and wherein said content data reception unit carries out the operation to receive all said content data encapsulated through said tunnel link from said server unit.

Another example is a method at a server unit of a data processing system for providing content data to a plurality of client units in response to content data requests, comprising the following operations: receiving a content data request requesting content data from said server unit from a client unit; maintaining a tunnel link between said requesting client unit and said server unit; providing said requested content data to said requesting client unit in response to said content data request; encapsulating all content data providing messages through said tunnel link to said requesting client unit; and receiving all said content data requests encapsulated through said tunnel link from said requesting client unit.

Further examples are directed to the aspect that the standard load balancing function of the load balancer is switched off during the content data request message exchange between a particular client unit and a particular server unit.

One example is a method for exchanging in a data processing system content data requests provided by a plurality of client units and content data response messages provided by a plurality of server units using a load balancer which carries out a distribution operation of the content data requests to the server units dependent on the processing loads of said server units, wherein when a client unit sends a content data request requesting content data to be provided by a server unit, said method comprises the operation of switching off the load balancing function of said load balancer and forwarding all content data request messages of the client unit directly to the server unit without undergoing load distribution at said load balancer.

Another example is a load balancer in a data processing system for providing content data from a plurality of server units to a plurality of client units in response to content data requests, comprising: a load determining unit for determining the processing load at the server units; and a load distribution unit for distributing content data requests from said plurality of client units to said plurality of server units dependent on the processing loads of said individual server units, wherein when a client unit sends a content data request requesting content data to be provided by a server unit, a balancer control unit switches off the load distribution unit of said load balancer for the content data request messages of said client unit and all content data request messages of the client unit are forwarded directly to the server unit without undergoing load distribution at said load balancer.

Another example is a method in a load balancer (BAL) of a data processing system for providing content data from a plurality of server units to a plurality of client units in response to content data requests, comprising the following operations: determining the processing load at the server units; and distributing, by a load distribution unit of said load balancer, content data requests from said plurality of client units to said plurality of server units dependent on the processing loads of said individual server units; and when a client unit sends a content data request requesting content data to be provided by a server unit, switching off the load distribution unit of said load balancer and forwarding all content data request messages of said client unit directly to the server unit without undergoing load distribution at said load balancer.

Further examples are directed to the aspect that the message exchange in a first communication protocol (for example portalconnect) is encapsulated in a second communication protocol (for example HTTP) allowing a detection of the user field of the content data request messages.

One example is a method for providing in a data processing system content data response messages containing content data from a plurality of server units to a plurality of client units in response to content data requests provided by said client units, including the operation of implementing the exchange of content data requests and content data response messages between a requesting client unit and a providing server unit in a first communication protocol, wherein the method further comprises the operation of encapsulating the message exchange between the client units and the server units in a second communication protocol allowing a detection of the user field of the content data request messages.

Another example is a client unit of a data processing system for providing content data from a plurality of server units to a plurality of client units in response to content data requests, comprising: a content data request unit adapted to send a content data request including a user field requesting content data from a server unit from said client unit to a server unit using a first communication protocol; a content data reception unit for receiving said requested content data in response to said content data request using said first communication protocol; wherein said content data request unit is adapted for encapsulating all content data requests of said first communication protocol in a second communication protocol; and said content data reception unit is adapted for receiving all said content data of said first communication protocol encapsulated through a said second communication protocol; said second communication protocol allowing a detection of the user field of the content data requests.

Another example is a server unit of a data processing system for providing content data to a plurality of client units in response to content data requests, comprising: a content data request message reception unit for receiving a content data request requesting content data from said server unit from a client unit; a tunneling unit for maintaining a tunnel link between said requesting client unit and said server unit; a content data providing unit for providing said requested content data to said requesting client unit in response to said content data request; wherein said content data request reception unit is adapted for receiving all content data requests of said first communication protocol encapsulated in a second communication protocol; and said content data providing unit is adapted for providing all said content data providing messages of said first communication protocol encapsulated through said second communication protocol; said second communication protocol allowing a detection of the user field of the content data requests.

Another example is a method in a client unit of a data processing system for providing content data from a plurality of server units to a plurality of client units in response to content data requests, comprising the following operations: sending a content data request including a user field requesting content data from a server unit from said client unit to a server unit using a first communication protocol; receiving said requested special content data in response to said special content data request using said first communication protocol; and encapsulating all special content data requests of said first communication protocol in a second communication protocol; and receiving all said content data of said first communication protocol encapsulated through a second communication protocol; said second communication protocol allowing a detection of the user field of the content data requests.

Another example is a method at a server unit of a data processing system for providing content data to a plurality of client units in response to content data requests, comprising the following operations: receiving a content data request requesting content data from said server unit from a client unit; maintaining a tunnel link between said requesting client unit and said server unit; providing said requested content data to said requesting client unit in response to said content data request; receiving all content data requests of said first communication protocol encapsulated in a second communication protocol; and said content data providing unit is adapted for providing all said content data providing messages of said first communication protocol encapsulated through said second communication protocol; said second communication protocol allowing a detection of the user field of the content data requests.

Further examples relate to the aspect that a load balancer can inspect the user field of content data request messages.

One example is a method for providing in a data processing system content data response messages containing content data from a plurality of server units to a plurality of client units in response to content data requests provided by said client units using a load balancer which carries out an operation of distributing the content data request messages to the server units on the basis of their processing loads, wherein the load balancer performs the operation of detecting the user field of the content data request messages.

Another example is a load balancer in a data processing system for providing content data from a plurality of server units to a plurality of client units in response to content data requests, comprising: a load determining unit for determining the processing load at the server units; and a load distribution unit for distributing content data requests having user fields from said plurality of client units to said plurality of server units dependent on the processing loads of said individual server units, wherein when a client unit sends a content data request including a user field requesting content data to be provided by a server unit, a user field evaluation unit of said load balancer detects a user field of the content data requests.

Further examples relate to the aspect that the messages of the first communication protocol are encapsulated in a second communication protocol and a second communication protocol sets up the fixed tunnel between the client unit and the server unit.

One example is a method for providing in a data processing system content data response messages containing content data from a plurality of server units to a plurality of client units in response to content data requests provided by said client units, comprising the operations of setting up a tunnel between said requesting client unit and said providing server unit and encapsulating the message exchange between said requesting client unit and said providing server unit in said tunnel.

Another example is a client unit of a data processing system for providing content data from a plurality of server units to a plurality of client units in response to content data requests, comprising: a content data request unit adapted to send a content data request including a user field requesting content data from a server unit from said client unit to a server unit using a first communication protocol; a content data reception unit for receiving said requested content data in response to said content data request using said first communication protocol; wherein said content data request unit is adapted for encapsulating all content data requests of said first communication protocol in a second communication protocol setting up a fixed tunnel link between said client unit and said server unit; and said content data reception unit is adapted for receiving all said content data of said first communication protocol encapsulated through a second communication protocol.

Another example is a server unit of a data processing system for providing content data to a plurality of client units in response to content data requests, comprising: a content data request message reception unit for receiving a content data request requesting content data from said server unit from a client unit; a tunneling unit for maintaining a tunnel link between said requesting client unit and said server unit; a content data providing unit for providing said requested content data to said requesting client unit in response to said content data request; wherein said content data request reception unit is adapted for receiving all content data requests encapsulated in a second communication protocol setting up a fixed tunnel link between said client unit and said server unit; and said content data providing unit is adapted for providing all said content data messages of said first communication protocol encapsulated through a said second communication protocol.

Another example is a method at a client unit of a data processing system for providing content data from a plurality of server units to a plurality of client units in response to content data requests, comprising the operations of: sending a content data request including a user field requesting content data from a server unit from said client unit to a server unit using a first communication protocol; receiving said requested content data in response to said content data request using said first communication protocol; encapsulating all content data requests of said first communication protocol in a second communication protocol setting up a fixed tunnel link between said client unit and said server unit; and receiving all said content data of said first communication protocol encapsulated through a said second communication protocol.

Another example is a method in a server unit of a data processing system for providing content data to a plurality of client units in response to content data requests, comprising: receiving a content data request requesting content data from said server unit from a client unit; maintaining a tunnel link between said requesting client unit and said server unit; providing said requested content data to said requesting client unit in response to said content data request; receiving all content data requests encapsulated in a second communication protocol setting up a fixed tunnel link between said client unit and said server unit; and providing all said content data messages of said first communication protocol encapsulated through a said second communication protocol.

Further examples include computer program products, programs and data carriers respectively for the server side, client side and load balancer side for carrying out the afore mentioned functions and operations, as will be explained below.

Further advantageous features and improvements of the present invention can be taken from the further dependent claims. Furthermore, the server unit, the client unit, the load balancer and the data communication system and the method may comprise features and operations which have been separately described and claimed in the specification and in the claims, respectively.

### BRIEF DESCRIPTION OF THE DRAWINGS

In the drawings, the same or similar reference numerals denote the same or similar operations or parts throughout.
- Fig. 1: shows a data communication system SYS in which a server unit SERV and a plurality of clients CL1, CL2, CL3, CL4, . . .CLN perform a data communication in accordance with the prior art;
- Fig. 2: shows a block diagram of a client unit CU and a server unit SERV in accordance with the prior art;
- Fig. 3: shows a client unit/server unit communication when the client requests the transfer of content data from the server unit, in accordance with the prior art;
- Fig. 4a: shows a data communication system SYS similar to the configuration in Fig. 1. however employing several server units and several kind units together with a load balancer BAL, in accordance with the prior art;
- Fig. 4b: shows more details of the data communication system SYS shown in Fig. 4a, in particular the internal units in the client, server and load balancer, in accordance with the prior art;
- Fig. 5: shows a flowchart similar as the flowchart in Fig. 3, however including operations for the load balancing function of a load balancer;
- Fig. 6a: shows a principal overview of units used in a data communication system SYS in accordance with an embodiment of the invention;
- Fig. 6b: shows a data communication system SYS using the establishment of a tunnel T between a client unit CL2 and a server unit SERV2 in accordance with one embodiment of the invention;
- Fig. 6c: shows a block diagram of the communication system SYS in accordance with an example of the invention, however including more details of the client units, server units and of the load balancer in order to carry out certain functionalities of the invention;
- Fig. 6d: shows a flowchart of the method carried out on the client side in accordance with one embodiment of the invention;
- Fig. 6e: shows a flowchart of the method carried out at the load balancer side in accordance with one embodiment of the invention;
- Fig. 6f: shows a flowchart of the method carried out on the server unit, in accordance with one example of the invention;
- Fig. 7a-7c: shows a flowchart of all operations carried out in an example method involving the client side load balancer side and the server side, in accordance with another example of the invention; and
- Fig. 8: is a flowchart of an example of a technical implementation of the setting up of a tunnel and of an encapsulation using for the second communication protocol HTTP.

### DETAILED DESCRIPTION OF THE PREFERRED EMBODIMENTS

Hereinafter, embodiments of the invention will be described with reference to the drawings. Whilst hereinafter often reference is made to a special message exchange between a client unit and a server unit in an Internet application example where web-pages are retrieved from a server unit in a JAVA environment, it should be understood that the invention is not limited to the JAVA data communication implementation.

The invention can be applied to any client server scenario, independent of the type of client and server implementation used. Furthermore, hereinafter references are often made to the special case where content data is requested from a client unit and is provided by a server unit to this client unit. However, it should be understood that the provision of the content data on the server side can entail the running of various applications on the server side from a special site and not just the retrieving of data from a database.

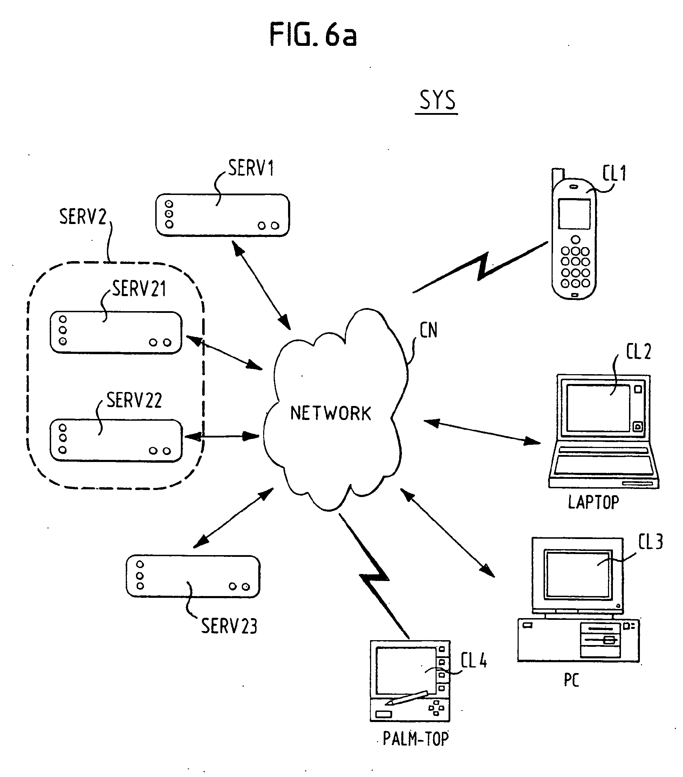

Before coming to a more detailed description of other embodiments, hereinafter we describe some aspects of the general data communication system as one example to which the invention can relate, with reference to Fig. 6a.

### GENERAL LAYOUT OF THE DATA PROCESSING SYSTEM SYS

Fig. 6a shows elements of the data processing system SYS including a network CN with a variety of different client units CL1, CL2, C13, CL4 and a plurality of server units SERV1, SERV2, (SERV21, SERV22), SERV3.

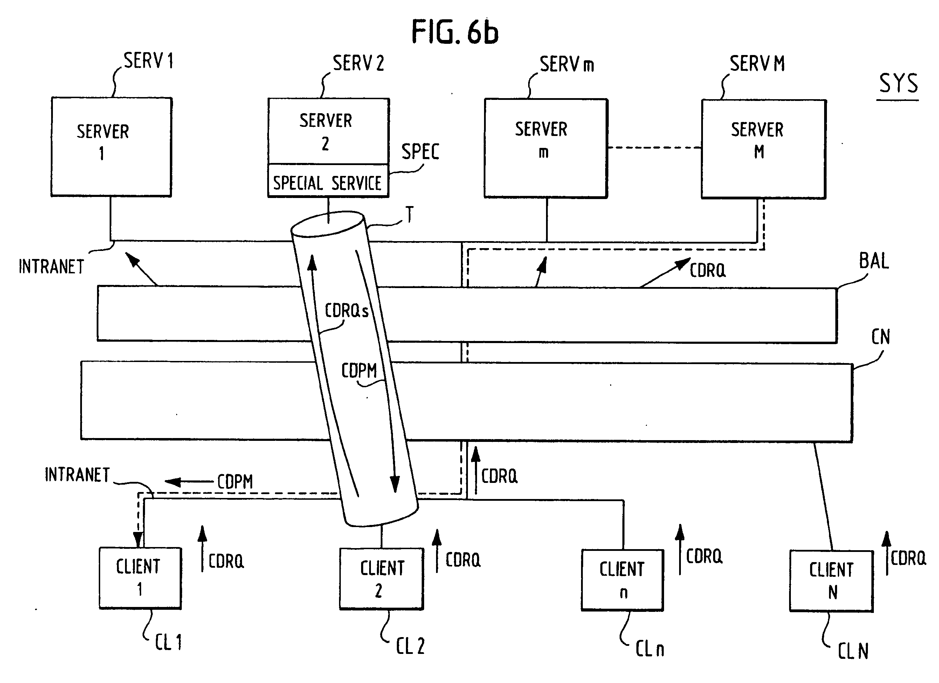

The network CN is provided for enabling a communication between the individual elements of the system for example shown in Fig. 6b. The communication network CN can be any kind of network for connecting the processing elements, such as a circuit switched network or a packet switched network. Furthermore, the communication network CN may include a plurality of different networks, e.g. a local area network, a wide area network, such as the Internet, or other networks, such as telephone networks, including telephone networks with dedicated communication links, connection-less networks and wireless networks.

Furthermore, Fig. 6a shows examples of client units, including a mobile telephone CL1, a laptop computer CL2, a personal computer CL3 and a palm top CL4.

Furthermore, Fig. 6a shows four server units SERV1, SERV21, SERV22, SERV3. The server units may be operated by different providers or vendors. For example, a first vendor or a provider may operate the server unit SERV1 and another provider or vendor may operate the server unit SERV3.

Furthermore, another vendor or provider may operate two servers SERV21, SERV22, as illustrated by the box SERV2.

Each of the individual units shown in Fig. 6a is connected to the communication network CN via any kind of communication link, including dedicated communication lines, connection links and wireless communication links.

For example, the mobile telephone CL1 may preferably be connected to the network CN via a wireless communication link WL, whereas the personnel computer CL3 will preferably be connected to the communication network CN via a communication link which includes a fixed transmission line, e.g. to a household or office.

The mobile telephone CL1 may be any kind of mobile telephone or terminal being equipped with hardware and/or software, for enabling the mobile telephone CL1 to function as a client unit as outlined below.

Furthermore, the mobile telephone CL1 may be equipped with a controlled unit for receiving a service request to process a data file, e.g. input through the keys of the mobile telephone or through voice. For example, a service request (content data request) could concern a display of directory information as in a standard form of mobile telephone. Furthermore, the mobile telephone possibly includes a plurality of implementation modules or of plug-ins to be activated via associated sub-file types. Thus, an implementation module can be selected which is compatible with the specific services provided by different telephone network operators or service providers. Furthermore, the implementation modules may be compatible with different versions of operating software at the server unit shown in Fig. 6a, whose particular functions will be explained below.

Furthermore, the laptop computer CL2 and the personal computer CL3 may be any kind of personal, laptop or mobile computing device connected to the network CN and equipped with appropriate hardware and/or software for enabling a functionality as described below. A different implementation module can be provided for cooperation with different server versions, application programs etc. This could include modules for visualization, text processing, scientific applications and similar.

Furthermore, the palm-top CL4 may be any kind of palm-top computer, equipped with appropriate hardware and/or software for enabling a functionality as outlined below. For example, the palm-top could have implementation module installed, for cooperation with different versions of calendar applications e.g. provided by different service providers or implementation modules for cooperation with different information services provided by different countries for example to display different characters such as Latin characters, Chinese and similar.

The server units SERV1, SERV21, SERV22, SERV3 may be any kind of server devices providing a functionality outlined with respect to the embodiments below. For example, the server unit SERV1 could have an operating system of a first version of a sub-version. A version or a sub-version may be any kind of modification of an operating system of a server unit, e.g. one of a released version of an operating program provided by specific vendor or manufacture. Further, the version could be a modification of an operating program for example of providers or for special services.

Each of the client units SL1, CL2, CL3 and CL4 is preferably equipped with implementation modules compatible with the version of the operating program of the server unit SERV1. Similar applies to any other applications program implemented at the server unit SERV1, e.g. each of the client units can be equipped with implementation modules compatible with a specific version of an application program at the server unit SERV1. The other server units SERV21, SERV22, SERV3 may one or all be equipped with further versions of the operating program of application program, for cooperation with further implementation module at the client unit.
Whilst Fig. 6a shows four examples of client units, it is understood that any client unit could be provided.

The embodiment described with reference to Fig. 6a particularly illustrates how a plurality of different server units and client units may cooperate with one another, while ensuring full compatibility.

### TUNNELING OF MESSAGE EXCHANGE

Fig. 6b shows a data processing system SYS similar to the one shown in Fig. 4a but configured in accordance with one embodiment of the invention. As in Fig. 4a, the data processing system SYS comprises a plurality of server units SERV1, SERV2, SERVm, SERVM and a plurality of client units CL1, CL2, CLn, CLN which communicate through a communication network CN and a load balancer BAL. In particular, the client units CL1, CL2, CLn, CLN output the content data request messages CDRQ to be directed to one or more of the server units. As in Fig. 1 the server units and the client units may be connected through a respective intranet. In response to content data request CDRQ the servers return content data messages CDPM including the content data requested by the content data request messages CDRQ. A load balancer BAL is provided for distributing the content data requests CDRQ to the individual server units SERVm dependent on the determined processing loads. The load balancer BAL will operate for standard content data request messages CDRQ with its intended purpose, namely it will distribute the content data request messages CDRQ to the individual server units dependent on their processing load.

However, as discussed above, some of the client units may run a first communication protocol which specifies that traffic for the same user and client unit will always have to be sent to the same host and server unit. In Fig. 6b the client unit CL2 is assumed to issue such special content data requests CDRQ requesting special content data from a special service SPEC only available in the server unit SERV2. For example, client unit CL2 may use a portalconnect® (portalconnect® is a trademark of Sun Microsystems) protocol implementation which specifies that all the content data request messages CDRQ from CL2 should be directed to the special server unit including the special service SPEC. Of course, portalconnect® as a first communication protocol for content data request messages is typically a proprietary protocol and the standard load balancers BAL generally do not allow for the detection of the user field transmitted in such content data request messages. Therefore, the load balancers BAL can not direct traffic to the right host, i.e. to the server unit SERV2, and instead a back end tunneling of the servers would be necessary, as illustrated in Fig. 4a and Fig. 4b.

As illustrated in Fig. 6b, in accordance with one example of the invention all the special content data requests CDRQ from the client unit CL2 requesting the special content data from the server SERV2 are forwarded to the particular server unit SERV2 encapsulated through a tunnel T without being distributed by the load balancer BAL. Also the return messages CDPM, namely the content data provision messages, are directly routed from the server unit SERV2 to the client unit CL2 encapsulated in the tunnel T. That is, all message exchange between the requesting client unit CL2 and the providing server unit SERV2, i.e. the special service provider SPEC, is encapsulated in this tunnel T.

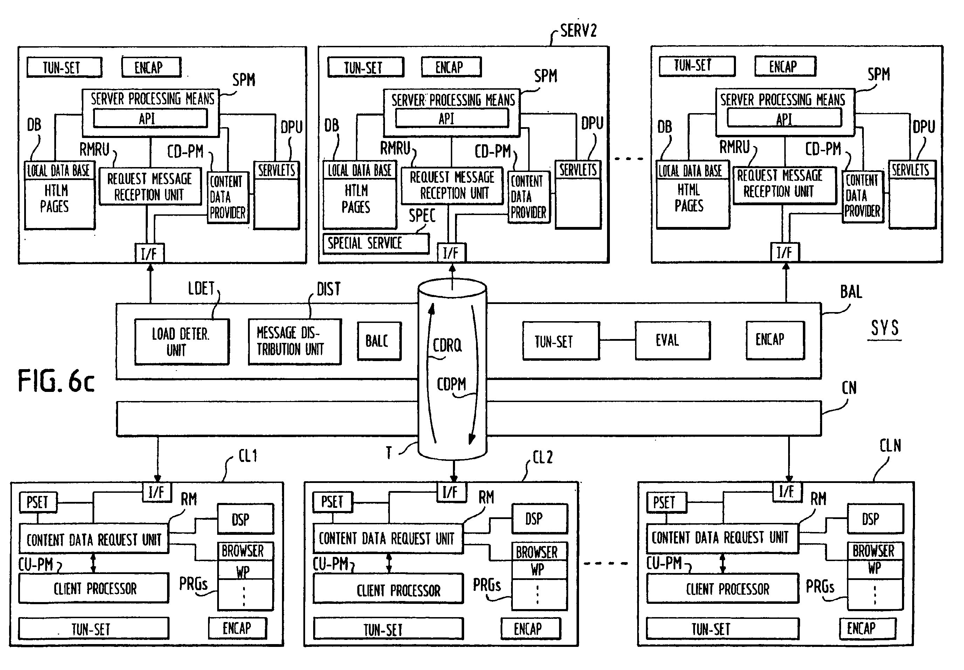

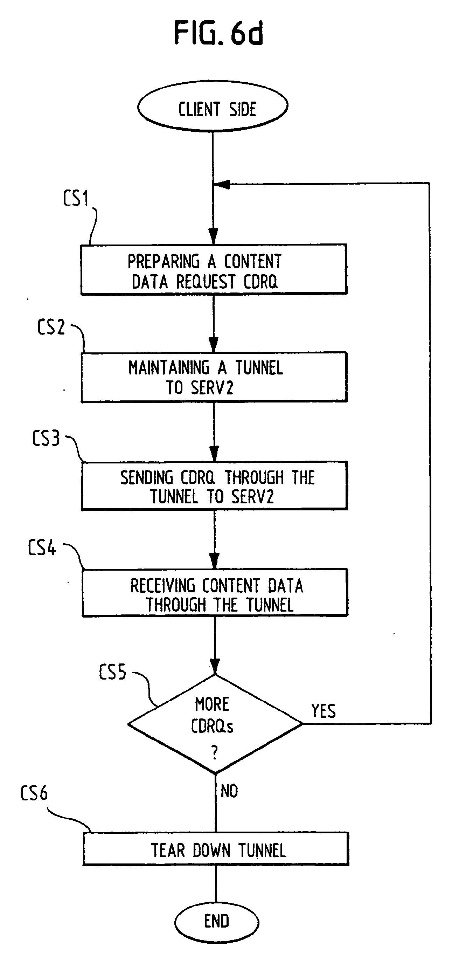

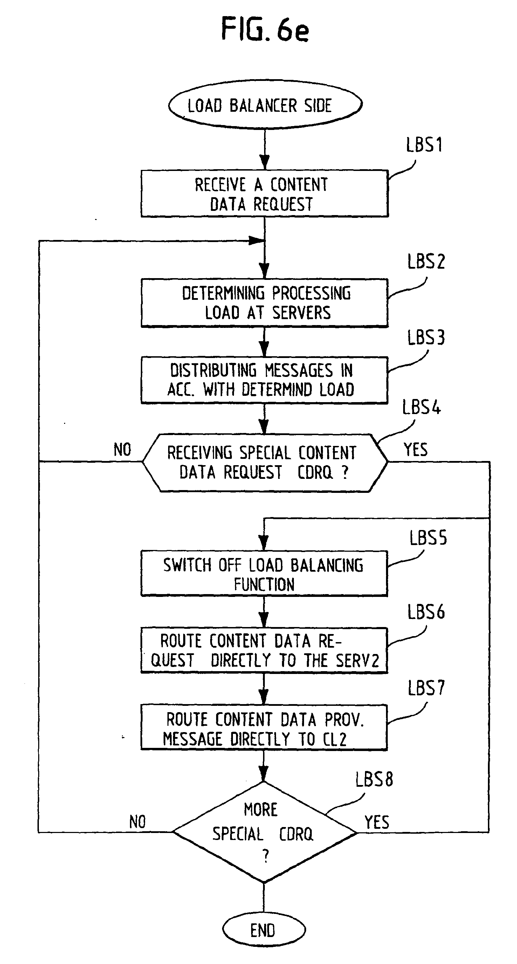

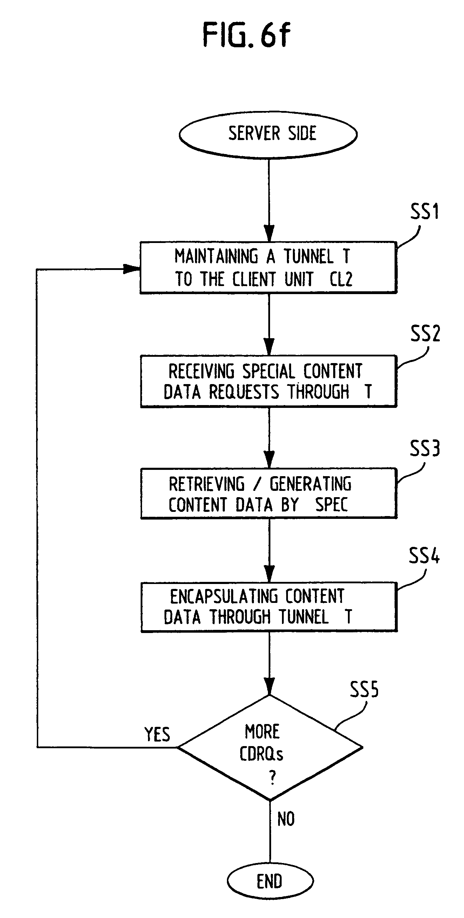

Hereinafter, the special techniques of setting up such a tunnel T between the server unit SERV2 and the client unit CL2 will be described, namely with respect to the individual units shown in the more detailed block diagram of Fig. 6c together with the client side, load balancer side and server side operations as shown in Figs. 6d, 6e, 6f. However, it should be noted that in principle the tunnel T could be set up by bypassing or circumventing or avoiding the load balancing function of the load balancer BAL for all the messages issued by the client unit CL2.

Another possibility is that the afore mentioned first communication protocol, for example portalconnect®, is encapsulated or transformed to be tunnelled via a second communication protocol, for example HTTP. That is, automatically if the message exchange between the client unit CL2 and server unit SERV2 is transformed or encapsulated in a second communication protocol which allows a detection of the user field, at least for the content data request message CDRQ issued by the client unit CL2, then automatically the tunnel T is established because the balancing restriction can be fulfilled.

In this manner, the load balancer BAL which supports balancing HTTP will be able to inspect the requests i.e. the user field of the content data request messages CDRQ.

The special content data requests CDRQ issued by the client unit CL2 include in such a user field a special service indication indicating the special service SPEC from which the content data is to be provided (either retrieved or generated) and a client unit identification CL-ID indicating the requesting special client unit CL2. When the load balancer inspects or detects this type of user field in the content data request messages, i.e. in the content data request messages having the first communication protocol transformed or tunnelled via the second communication protocol (e.g. HTTP), the load balancer BAL determines from the special service indication the server unit SERV2 at which the special service is available and forwards the special content data request to the determined server unit SERV2 independent from the determined load conditions at the other servers.

Thus, the client unit identification (user identification) is used in the way in which the second communication protocol for example HTTP, usually reflects a session between the client unit CL2 and the server unit SERV2, that is by sending a cookie or rewriting URLs. Using the transformation or encapsulation the common load balancer features can be used to keep sessions to one host to ensure that the traffic from the client unit CL gets directed to the some host even across webtop-sessions.

Whilst in the configuration in the Fig. 4a and Fig. 4b all the request messages CDRQ issued by the client units can not be inspected by the load balancer BAL, in the configuration in Fig. 6a, the content data request messages CDRQ of the first communication protocol type which includes a user field are transformed or tunnelled through a second communication protocol, e.g. HTTP, and this allows the load balancer BAL to inspect a user field of the tunnelled or transformed content data request messages in order to route all the transformed content data request messages having the same user field or same special service indication always to the same server unit SERV2. That is, the imaginary set up of the tunnel may be viewed as having been achieved by providing by the load balancer BAL content data request messages CDRQ which can be inspected by the load balancer BAL.

Whilst the first communication protocol for issuing the content data request messages CDRQ may be a proprietary protocol which indeed allows the detection of the user field, the tunneling of these messages in a transformed manner through a second communication protocol to the load balancer BAL enables the routing of the first and all subsequent special content data requests having the same client unit identification and special service indication directly to the special server unit SERV2 through the tunnel T.

Thus, the "setting up of a tunnel for encapsulating the message exchange", "encapsulation of first communication protocol type content data request messages in a second communication protocol allowing a detection of the user field of the content data request messages", and "switching off the load balancing function of the load balancer and directly forwarding the content data request messages to the server unit" all designate the same functionality in the data processing system SYS, namely that all content data request messages desiring content data from a special service SPEC residing in a special server unit SERV2 will be directed to this special server unit SERV2, and that all the response messages will be directed directly from the special server unit SERV2 to the requesting client unit CL2, this being done even independently of the load distribution functions of the load balancer BAL.

In particular, by using the afore mentioned functions in the data processing system SYS the common load balancer features can be relied upon to keep sessions to one host to ensure traffic for one user gets directed to the same host even across webtop-sessions.

### CLIENT UNIT, SERVER UNIT AND LOAD BALANCER CONFIGURATIONS

Whilst the general set up of the tunnel for encapsulating the message exchange between the client unit CL2 and the server unit SERV2 has been described above with reference to Fig. 6b, hereinafter Fig. 6c will be explained with respect to the individual configurations used in the client unit, the load balancer and the server units. Some of the processing units shown in Fig. 6c have already been described above with reference to Fig. 4b.

That is, the content data request unit RM, the client processor CU-PM, the programs PRGs, the display DSP, the page setting unit PESET and the interface I/F perform the same functions as the corresponding units in Fig. 4b.

Likewise, the load distribution unit LDET, the message distribution unit DEST and its control by the balancer control unit BALC in Fig. 6c have similar functions as the corresponding units in the Fig. 4b.

Furthermore, the local database DB, the server processing unit SPM, the request message reception unit RMRU, the data processing units DPU and the content data provider CD-PM as well as the special service provider SPEC in Fig. 6c perform the similar functions as the corresponding units in the Fig. 4b.

Using the afore mentioned standard units, content data request messages CDRQ will normally be distributed to the server units depending on the determined processing load at the servers. For achieving the afore mentioned embodiment of the invention to set-up a tunneling of content data request messages and content data provision messages between the client unit CL2 and the server unit SERV2, the client unit, the load balancer and the server units comprise the following units in accordance with an example of the invention.

### FUNCTIONALITY OF THE CLIENT UNIT

The operations of the client unit in connection with the units shown in Fig. 6c are shown in a flowchart in Fig. 6d.

In the operation CS1 in Fig. 6d the content data request unit RM prepares a content data request CDRQ, for example by running a browser program. In the operation CS2, a tunneling unit TUN-SET maintains a tunnel link T between the client unit CL and the special server CRV. Possibilities for setting up this tunnel T have been described above, for example by encapsulating the content data request messages CDRQ or the first communication protocol in a second communication protocol which preferably allows the detection of the user field by the load balancer BAL. The "maintaining" of a tunnel T also comprises the set-up of such a tunnel between the client unit CL2 and the server unit SERV2 and the tearing down of such a tunnel T.

In the operation CS3 the content data request unit RM sends the special content data requests requesting special content data from the special server SERV2 through the tunnel T to the addressed server unit SERV2. In the operation CS3 all special content data requests requesting the special content data from the special server unit are encapsulated through the tunneling T to the special server unit SERV2.

In the operation CS4 a content data reception unit, for example constituted by the client processor CU-PM, receives all the special content data provision messages CDPM containing special content data generated by the special service provider SPEC of the particular server unit SERV2 encapsulated through the tunnel link T. The operation CS4 of course also comprises the de-encapsulation of the special content data messages, e.g. the re-transformation from the second communication protocol to the first communication protocol as will be explained below.

If, in the operation CS5 the client processor CU-Pm determines that further content data request messages CDRQs should be issued to the special server unit, the sequence of operations CS1-CS4 is repeated. If no more content data requests must be issued, the tunnel T is torn down in the operation CS6.

The encapsulation or the de-encapsulation of content data request messages CDRQ or the reverse encapsulation of content data provision messages CDPM can either be performed by the content data request unit RM itself, or by an additionally provided encapsulation/de-capsulation unit ENCAP as shown in Fig. 6c.

Whilst in Fig. 6d the operations CS3, CS4 describe the message exchange between the client unit CS2 and the server unit SERV2 for the most important messages, namely the uplink transmission of content data request messages and the down link transmission of content data provision messages CDPM, it should be noted that the operations CS3, CS4 are also generally applicable to other messages which needed to be exchanged between the client unit CL2 and the special server unit SERV2. That is, operations CS3, CS4 are generally representative for all the message exchange between the client unit and the server unit. Furthermore, in the operation CS3 the content data request messages CDRQ are of course routed to the load balancer BAL. However, since the load balancer BAL forwards the content data request messages CDRQ and the content data provision messages CD-PM through the tunnel T, the operation SC3 may also be viewed as sending content data request messages CDRQ directly (and transparently through the load balancer) to the server unit SERV2.

As explained above, the maintaining of a tunnel T between the client unit CL2 and the server unit SERV2 is identical to having the first communication protocol type special content data request messages encapsulated in a second communication protocol allowing a detection of the user field of the content data requests CDRQ. Therefore, the operations CS2 and CS3 in Fig. 6d may also be viewed as encapsulating the first communication protocol special content data requests in a second communication protocol and forwarding them to the server unit SERV2.

### FUNCTIONALTY OF THE LOAD BALANCER

Hereinafter, the functionalities of the load balancer BAL, as schematically shown in Fig. 6c and illustrated as a flow chart in Fig. 6e, will be described.

In the operation LBS1 the load balancer BAL receives a content data request CDRQ from the client unit CL2. If it is not a special content data request requesting special content data from the special service provider SPEC, then the load determining unit LDET of the load balancer BAL performs the normal function of determining the processing load at the server units in operation LBS2. In the operation LBS3 the content data request message is distributed by the load distribution unit DEST in accordance with the determined processing load to the plurality of server units SERV.

In the operation LBS4 it is tested whether a special content data request CDRQ is received. If this is not the case (NO in the operation LBS4), then the received content data request was not a special content data request and the load determining and load distribution operation LBS2, LBS3 are repeated.

If however in the operation LBS4 a special content data request CDRQ requesting special content data from special server unit SERV2 is received, the balancer control unit BALC switches off the load distribution unit DEST of the load balancer BAL in the operation LBS5. Consequently in the operation LBS6, all special content data request messages of the special client unit CL2 are forwarded directly (through the tunnel T) to the special service unit SERV2 without undergoing load distribution at the load balancer BAL.

In the operation LBS7 the load balancer receives the corresponding content data provision messages and routes them directly to the respective client unit CL2 having requested the special content data.

If in the operation LBS8 further special request messages CDRQ are detected by the load balancer, then the operation LBS7 are repeated. That is, all subsequent CDRQ messages requesting a content data from the same special server unit SERV, more precisely from the special service provider SPEC, are routed to the same special server unit SERV2. If "standard" content data request messages CDRQ, i.e. those which do not have to be always routed to the same server unit, are detected in the operation LBS8, then the process continues with the operation LBS2, i.e. standard load determination and subsequent message distribution.

As already described above, the maintaining of a tunnel T, the switching off of the load distribution function and the evaluation of a user field in a transformed special content data request message all relate to the same functioning of the load balancer. Therefore, in the operation LBS5 it can also be provided that the load balancer BAL detects, by an evaluation unit EVAL, the user field of the content data requests CDRQ in order to determine to which special server unit SERV2 a particular content data request message CDRQ is to be routed. Thus, by evaluating the content data request messages such content data request messages are routed transparently through the load balancer BAL. Thus, also the load balancer BAL may be viewed as maintaining or setting up a tunnel T for routing the special content data request messages, and the special content data provision messages between the client unit and the server unit. Such a tunneling unit is shown in Fig. 6c with reference numeral TUN-SET.

### FUNCTIONALITY OF THE SERVER UNIT

Fig. 6c also shows the functionalities of the server unit SERV2 in accordance with an example of the invention. Fig. 6f shows the flowchart of the operations carried out at the server unit SERV of the data processing system SYS.

In the operation SS1, a tunneling unit TUN-SET maintains a tunnel link T between the requesting client unit CL and the server unit SERV. The maintaining of the tunnel T in the operation SS1 also comprises the setting up of the tunnel T when receiving the special content data request message CDRQ.

In the operation SS2 the special content data request CDRQ is received through the tunnel T by the request message reception unit RMRU. In the operation SS3 the content data request message is forwarded to the special service provider SPEC which is to retrieve or generate the special content data as requested with the request message. In the operation SS4 an encapsulation unit ENCAP or the content data providing unit CD-PU itself are adapted for encapsulating all the content data providing messages through the tunneling T to the requesting client unit SERV. The provision of the content data provision messages CDPM through the tunnel T is illustrated in Fig. 6c.

In the operation SS2, as mentioned above, the content data request messages are received through the tunnel T which also extends through the load balancer BAL. Therefore, one can say that in the operation SS2 the request messages reception unit RMRU receives the content data request message from the load balancer BAL.

Whilst the operations SS2 and SS4, i.e. the content data request message receiving and the content data provision, was described above in the operations SS2, SS4, it should be noted that the request and provision messages are only the minimum messages which can be exchanged between the special client unit and the special server unit. However, additional messages which may have to be exchanged between the client unit CL2 and the server unit SERV2 can also be exchanged and encapsulated through the tunneling T.

As explained above, the abstract idea of setting up a tunnel T between the client and the server, i.e. a direct "line" between the client and the server, can be achieved by transforming or encapsulating the first communication protocol content data request messages in a second communication protocol provided for the transfer of the messages, wherein the second communication protocol allows a detection of the user field of the content data requests. Thus, the tunneling unit TUN-SET may be viewed as carrying out in the operation SS1 the transformation or encapsulation of the first communication protocol messages in a second communication protocol, for example HTTP, allowing a detection of the user field of the content data requests.

As also explained above, it is precisely the detection of the user field, i.e. the detection of the user field in the load balancer, which also contributes to the setting up of a transparent tunnel T for special content data request and provision messages through the load balancer BAL, something the load balancer according to its prescribed function would not do. All other messages, i.e. not messages which request a service from a special service provider, are routed and distributed in accordance with the load distribution function of the load balancer BAL.

Thus, one can also say that a transparent link between the client unit and the server unit may be set up for the first communication protocol content data request messages within a second communication protocol, i.e. encapsulated through the second communication protocol.

Thus, as described for the individual units of the server, the load balancer and the client, with reference to the flowcharts in Fig. 6d, Fig. 6e and Fig. 6f, in the data processing system SYS in accordance with an example of the invention the common load balancer feature can be relied upon to keep sessions to one host to ensure that traffic from the client gets directed to the same server even across webtop-sessions. That is, content data request messages CDRQ in a (first communication) protocol implementation prescribing that traffic for the same users is always sent to the same host are transformed to be tunneled via a second communication protocol, e.g. HTTP. The load balancer BAL can thus inspect the content data requests, in particular the user field of the requests, in order to route content data request messages having the same user field and same special service indication to the same server unit.

If for example the second communication protocol is HTTP, the user ID can be used in the way in which HTTP usually reflects a session that is by sending a cookie or rewriting URLs.

### FUNCTIONALITY OF THE DATA PROCESSING SYSTEM

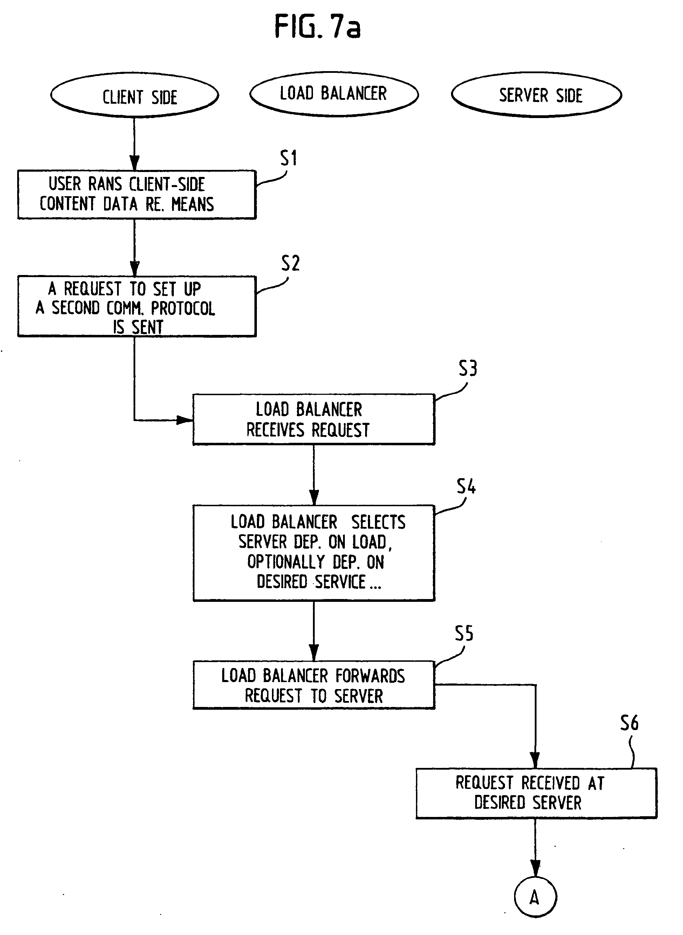

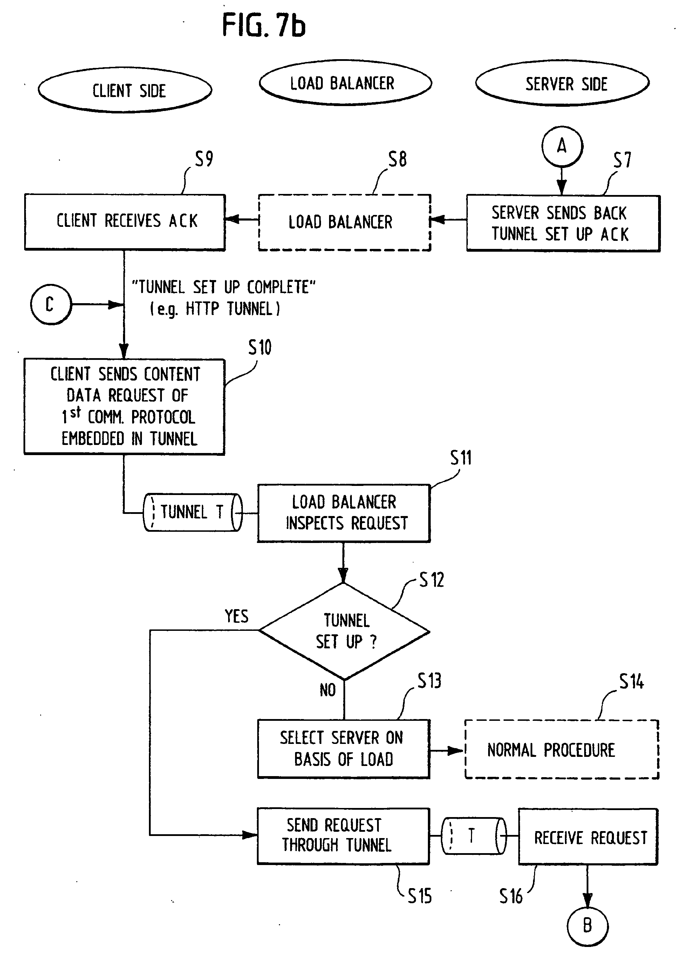

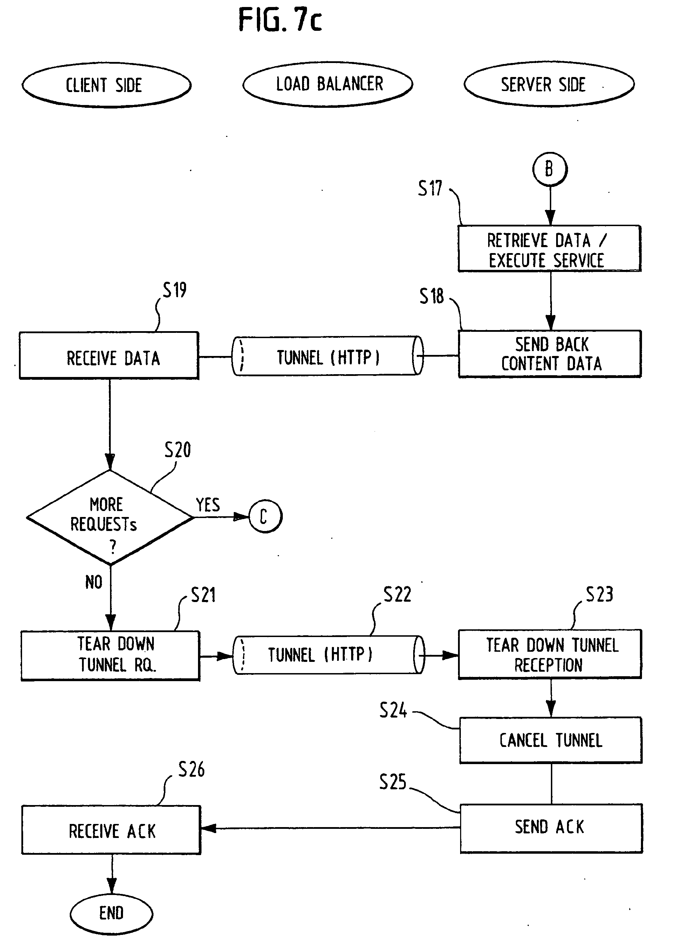

Fig. 7a, 7b and 7c show a flowchart of an embodiment of a method for providing in a data processing system SYS content data from a plurality of server units SERV to a plurality of client units CL in response to content data requests CDRQ. The principle configuration and the individual units in the server unit, client unit and load balancer are shown in Fig. 6c. Fig. 7 shows in a sequential flowchart the operations carried out on the client side, load balancer side and server side when a client unit issues a content data request CDRQ to obtain data from a special service provider SPEC provided in the server SERV2.

In Fig. 7a, 7b the operations S1-S11 are used, in accordance with an embodiment of the invention, to set up a tunnel T for routing a first content data request CDRQ and all subsequent content data requests of the same client unit to the desired server. In the operations S1-S9 a tunnel T is set up using a second communication protocol for embedding or encapsulating the subsequent first communication protocol content data request. However, it should be noted that the operations S1-S11 can be replaced by operations in which the first sent first communication protocol content data request is inspected at the load balancer BAL and the tunnel is only subsequently, i.e. after inspecting the first content data request CDRQ, set up.

In the operation S1, a user runs a client-side content data request means RM, e.g. browser selected from the programs PRGs. Content data requests CDRQ issued by this content data request unit RM may be implemented in a first communication protocol, e.g. portalconnect, which specifies that traffic for the same user will also be sent to the same host.

In the operation S2, a request is issued to set up a second communication protocol, i.e. to set up a tunnel T for encapsulating messages of the first communication protocol, to the desired server SERV2. In the operation S3 a load balancer BAL receives the second communication protocol tunnel set up request. The operation S3 can for example be carried out by a tunneling unit TUN-SET of the client side. In the operation S4 the load balancer selects a server either by using the normal load determining and message distribution function carried out by the load determination unit LDET and the message distribution unit DIST. Optionally, the load balancer BAL can select the server dependent on the desired service which can indicated in the request issued in the operation S2.

In the operation S5 the load balancer BAL forwards the request to the server and the tunnel set up request is received at the desired server in the operation S6. The operation S5 may be carried out by a tunneling unit TUN-SET of the load balancer BAL.

In the operation S7 in Fig. 7b the desired server, for example the server SERV2 sends back a tunnel set up acknowledgement indicating that the server side has understood that a direct tunnel between the client unit CL2 and server unit SERV2 should be set up. The acknowledgement for the tunnel set up may be issued by a tunneling unit TUN-SET of the server SERV2. In the operation S8 the acknowledgement message is sent back through the load balancer and is received in operation S9 at the client side. After the operation S9 the client side, the load balancer and the server side have set up a tunnel ("tunnel set up complete" in Fig. 7b). Such a tunnel can for example be an HTTP tunnel which is subsequently used for encapsulating or embedding all content data requests having the first communication protocol. The tunnel is set up with the HTTP protocol i.e. the second communication protocol.

In the operation S10 the client unit issues the content data request CDRQ of the first communication protocol which is then encapsulated through the tunnel T to be forwarded to the load balancer site. In the operation S11 the load balancer receives the content data request CDRQ. Optionally, in the operation S12, the load balancer can once more check whether the tunnel has been set up. This check can for example be carried out by the tunneling unit TUN-SET. If there is no tunnel set up in the operation S12, the load balancer BAL carries out its normal load distribution function in the operation S13 and the "normal" procedure is followed in the operation S14, e.g. the use of a possible back end tunnel in case that the addressed server found with the load distribution does not contain the data desired with the content data request.

If in the operation S12 the tunnel set up is confirmed, the content data request is sent from the load balancer site in the operation S15 through the tunnel T to the server side where it is received in the operation S16.

In the operation S17 in Fig. 7c the special content data provided by a special content provider SPEC on the server side is retrieved and the content data is sent back to the client side in the operation S18 through the tunnel T, i.e. the content data provision messages containing the desired retrieved content data are encapsulated in the tunnel T and are received in the operation S19 on the client side. If more requests are issued in the operation S20, the process continues with C in Fig. 7b. That is, all subsequent special content data request being directed to the same server unit SERV2, i.e. having the same client unit identification and the same special service indication are directly forwarded to the special server unit through the tunnel T.

If in the operation S20 no further special content data requests from the client unit CL2 are issued, the tunneling unit TUN-SET on the client side issues a tunnel tear down request in the operation S21 which is received through the operations S22 and S23 on the server side. Then, in the operation S24, the server side cancels the tunneling, a function which may be carried out by the tunneling unit TUN-SET on the server side. In the operation S25 an acknowledgement of the tear down of the tunnel is sent back to the client unit where it is received in the operation S26.

As explained above, the embodiment in the Fig. 7 is based on the assumption that a separate tunnel set up takes place before the actual content data requests are encapsulated and forwarded through the tunnel. Alternatively, in accordance with another embodiment of the invention, the first send out content data request CDRQ also causes the set up of the tunnel T, for example because it is immediately inspected with respect to the client unit identification and the special service indication at the load balancer. Therefore, it should be understood that also the first content data request CDRQ may immediately be embedded in the tunnel.

### TECHNICAL IMPLEMENTATION OF THE TUNNELING AND ENCAPSULATION

It should be noted that a skilled person knows about encapsulation and de-capsulation and tunneling as standard techniques. For example, if a number of request messages are using a proprietary communication protocol encapsulated in HTTP, HTTP provides to the load balancer a hint to schedule requests to the desired server thus disabling or switching off the load balancing function of the load balancer for all requests from a particular client unit. Such a hint can for example be contained in a first packet of the content data request whose user field is examined at the load balancer. If it indicated a special service from a special service which is only located in one of the servers, the load balancer will route this message and all subsequent messages having the same special service indication to the same server. Thus, a tunnel is set up between the client and the server through the load balancer who has switched off its load balancing function only for the special request messages containing the desired special service.

On the client and server side, the setting up or maintaining of the tunnel can mean the provision of the request messages of the first communication protocol to be transported by the second communication protocol. Encapsulation is for example also described in "Richard Stevens, TCP/IP illustrated, ISBN 020 163 346 9, 1st Feb 1994". Hereinafter a technical example is described.

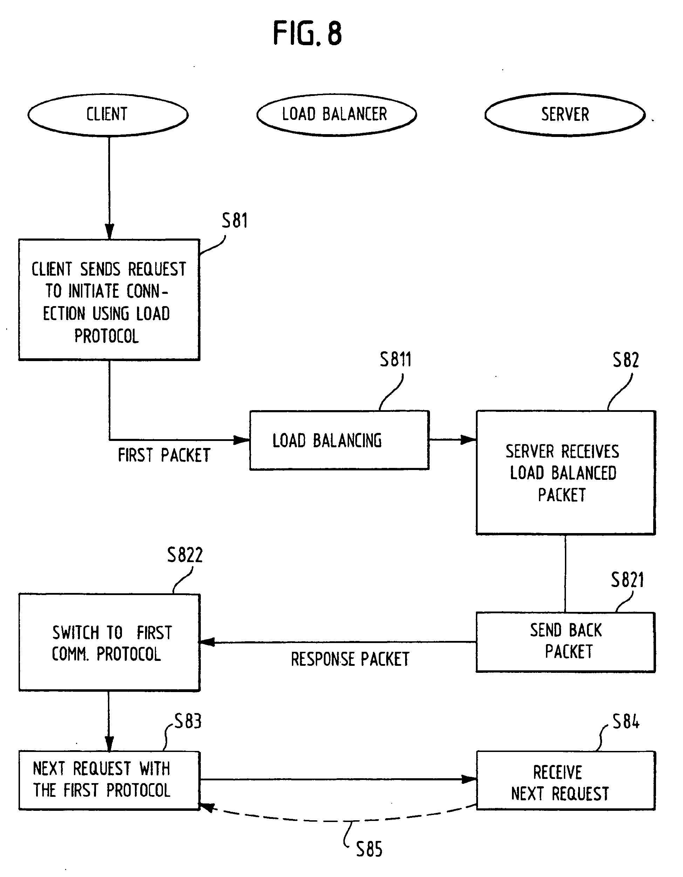

To describe what is meant under the terms "tunnel" and "encapsulation" an connection establishment example between the client side and the server side is considered hereinafter with reference to Fig. 8. Suppose there is a site "virtual.hosting.com", and a client wants to connect there and make use of some of the services that are running by this domain.

| | | |
|---|---|---|
| * | Operation S81: | Client sends the request to initiate the connection in terms of the second communication protocol. |

This is the normal HTTP packet, and it can generally look like this:
GET /slw-pconnet/service?S1WSESSION-user_name HTTP/1.1
Host: virtual.hosting.com:80
User-Agent: Sun ONE webtop client vl.1
Cookie: S1WSESSION=user_name
Upgrade: S1WPC/1.0
Connection: Upgrade
Cache-Control: no-cache

Note that there is an entity called "S1WSESSION" that has a value of the user's name. When the load balancer sees such an entity, this is a hint to the load balancer to balance this request to the same host where all previous requests that contained the entity with the same name and value were balanced before (effectively, if there were such messages before, than this entity is a hint to switch the load balancers off.

| | | |
|---|---|---|
| * | Operation S82: | Real server host receives the already load-balanced packet (operation S811) from the client and sends a response back (operation 5821). |

The response is also a normal HTTP packet, typically looking like this:
HTTP/1.1 101 Switching Protocols
Set-Cookie: SlWSESSION-user_name
Upgrade: SlWPC/1.0
Connection: Upgrade
Cache-Control: no-cache

Note that this is 101 response, which (in cooperation with fields "Upgrade" and "Connection") urges the client to switch (operation S822) to the first (binary) communication protocol, which is proprietary one. Also, note that at this point a PHYSICAL (i.e., normal TCP/IP) connection is established between the client and the server; this connection can be used to send any other messages in particular the messages PREQ and DIN. This is what could be safely referred to as "tunnel".

| | | |
|---|---|---|
| * | Operation S83: | Client receives the response, and sends the next request using the first (which is binary and proprietary) communication protocol. |
| * | Operation S84: | Server receives the request from the client and serves it. |

Then the client and the server keep executing operations S83 and S84 (as indicated with S85) until the client decides to stop using the services.

So, it is now clear that the first communication protocol cannot be used unless connection is negotiated using the second (HTTP in our example) communication protocol (otherwise, the load balancer that is unaware about the first (binary) communication protocol will schedule the request to the wrong host). Such layering of the protocols is referred to as "encapsulation".

### FURTHER EMBODIMENTS OF THE INVENTION

The client processor CU-PM and the server processing unit SPM or any other data processing device in the data processing system may be constituted by any kind of data processing device, such as a general purpose data processing device, a plurality of interconnected data processing devices, a mobile computing device, a personal data organizer, a mobile communication device, including mobile telephones and similar. The data processing device may be connected to other data processing devices (not shown) via any kind of communication link, including communication networks, connection less communication links, dedicated communication lines, wireless transmission links and similar.

The client control unit may be realized as an integral part of a data processing unit. For example, the client control unit could be realized in association with a central processing unit and by corresponding software operations, or could be realized as a hardware device, located inside or outside the data processing unit. Further, the control unit could be realized partially in hardware and partially in software. Further, the client control unit may be a single entity or distributed, e.g. over a plurality of data processing devices.

The requested content data can be a text document, may contain video information, images, audio information, could specify that the data file contains data in a specific other format, that the data file includes commands for further processing, parameters, results of scientific applications and similar. The content data may be located at a arbitrary location, e. g. within a memory unit of the server unit or at an external memory unit. The implementation module activated for retrieving content data may therefore retrieve the content data from the memory unit, either through an internal connection or via a connection to an external data processing device, such as a communication line or communication network including wireless connections.

It is noted that the above described elements and/or operations for requesting data, providing data and for the other functionalities in the data processing system may at least partially be realized as software or hardware. I. e. controls can be carried out using dedicated hardware, or a correspondingly programmed data processing device or group of data processing devices.

### CODE SECTION EMBODIMENTS OF THE INVENTION

Although the invention has been described with reference to general units and operations, it should be noted that the invention can be also be carried out by implementing each of the afore mentioned operations and units in software or hardware.

Further, it is noted that a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

In the following sections further examples of the elements of a server unit, a client unit and a load balancer of the above described data processing system will be outlined. In these sections the respective units are implemented using code sections realized in software or hardware.
**1)** A client unit (CL) of a data processing system (SYS) for providing content data from a plurality of server units (SERVm) to a plurality of client units (CLn) in response to content data requests (CDRQ), comprising:
   **a)** a content data request code section (RM) adapted to send a content data request requesting content data from a server unit from said client unit (CL) to a load balancer (BAL) of said data processing system (SYS) which determines the current processing load at each server unit (SERVm), said load balancer distributing, in accordance with the determined processing load, said content data request to one of said server units (SERV) for having the content data retrieved from said server unit (SERV);
   **b)** a tunneling code section (TUN-SET) for maintaining a tunnel link (T) between said client unit (CL) and said server unit (SERV);
   **c)** a content data reception code section (CU-PM) for receiving said requested content data in response to said content data request (CDRQ); wherein
   **d)** said content data request code section (RM) is adapted for encapsulating all content data requests requesting said content data from said server unit (SERV) through said tunnel link (T) to said server unit (SERV); and
   **e)** said content data reception code section (CU-PM) is adapted for receiving all said content data encapsulated through said tunnel link (T) from said server unit (SERV).
**2)** A client unit according to example 1),
   wherein said content data request includes in a user field a service indication indicating the service from which the content data is to provided and a client unit, identification (CL-ID) indicating the requesting client unit (CL2).
**3)** A client unit according to example 1),
   wherein said content data request code section (CDRQ) and said content data reception code section (CU-PM) are adapted for using a first communication protocol (portalconnect) and said tunneling code section (TUN-SET) is adapted to maintain said tunnel link (T) by using a second communication protocol (HTTP).
**4)** A client unit according to example 3),
   wherein said second communication protocol (HTTP) is HTTP.
**5)** A client unit (CL) of a data processing system (SYS) for providing content data from a plurality of server units (SERVm) to a plurality of client units (CLn) in response to content data requests (CDRQ), comprising:
   **a)** a content data request code section (RM) adapted to send a content data request requesting content data from a server unit from said client unit (CL) to a server unit (SERV);
   **b)** a tunneling code section (TUN-SET) for maintaining a tunnel link (T) between said client unit (CL) and said server unit (SERV);
   **c)** a content data reception code section (CU-PM) for receiving said requested content data in response to said content data request (CDRQ); wherein
   **d)** said content data request code section (RM) is adapted for encapsulating all content data requests requesting said content data from said server unit (SERV) through said tunnel link (T) to said server unit (SERV); and
   **e)** said content data reception code section (CU-PM) is adapted for receiving all said content data encapsulated through said tunnel link (T) from said server unit (SERV).
**6)** A client unit according to example 5),
   wherein said content data request code section (CDRQ) and said content data reception code section (CU-PM) are adapted for using a first communication protocol (portalconnect) and said tunneling code section (TUN-SET) is adapted to maintain said tunnel link (T) by using a second communication protocol (HTTP).
**7)** A load balancer (BAL) in a data processing system (SYS) for providing content data from a plurality of server units (SERVm) to a plurality of client units (CLn) in response to content data requests (CDRQ), comprising:
   **a)** a load determining code section (LDET) for determining the processing load at the server units; and
   **b)** a load distribution code section (DIST) for distributing content data requests from said plurality of client units (CL) to said plurality of server units (SERV) dependent on the processing loads of said individual server units (SERV), wherein
   **c)** when a client unit (CL2) sends a content data request (CDRQ) requesting content data to be provided by a server unit (SERV2), a balancer control code section (BALC) switches off the load distribution code section (DIST) of said load balancer (BAL) for the content data request messages of said client unit and all content data request messages of the client unit (CL2) are forwarded directly (T) to the server unit (SERV2) without undergoing load distribution at said load balancer (BAL).
**8)** A load balancer according to example 7),
   wherein said load balancer (BAL) of said communication system (SYS) comprises a user field evaluation code section (EVAL) for detecting the user field of the content data requests (CDRQ).
**9)** A client unit (CL) of a data processing system (SYS) for providing content data from a plurality of server units (SERVm) to a plurality of client units (CLn) in response to content data requests (CDRQ), comprising:
   **a)** a content data request code section (RM) adapted to send a content data request including a user field requesting content data from a server unit from said client unit (CL) to a server unit (SERV) using a first communication protocol;
   **c)** a content data reception code section (CU-PM) for receiving said requested content data in response to said content data request (CDRQ) using said first communication protocol; wherein
   **d)** said content data request code section (RM) is adapted for encapsulating all content data requests of said first communication protocol in a second communication protocol; and
   **e)** said content data reception code section (CU-PM) is adapted for receiving all said content data of said first communication protocol encapsulated through a said second communication protocol;
   **f)** said second communication protocol (HTTP) allowing a detection of the user field of the content data requests (CDRQ).
**10)** A load balancer (BAL) in a data processing system (SYS) for providing content data from a plurality of server units (SERVm) to a plurality of client units (CLn) in response to content data requests (CDRQ), comprising:
   **a)** a load determining code section (LDET) for determining the processing load at the server units; and
   **b)** a load distribution code section (DIST) for distributing content data requests having user fields from said plurality of client units (CL) to said plurality of server units (SERV) dependent on the processing loads of said individual server units (SERV), wherein
   **c)** when a client unit (CL2) sends a content data request (CDRQ) including a user field requesting content data to be provided by a server unit (SERV2), a user field evaluation code section (EVAL) of said load balancer (BAL) detects a user field of the content data requests (CDRQ).
**11)** A load balancer according to example 10),
   wherein said load balancer (BAL) forwards all content data request messages (CDRQ) having the same user field to the same server unit (SERV) independent of the load distribution function of a load distribution code section (DIST) of said load balancer (BAL).
**12)** A load balancer according to example 10), wherein said load balancer (BAL) comprises a tunneling code section (LTUN) for maintaining a tunnel link (T) between said requesting client unit (CU) and said providing server unit (SERV) for forwarding of said content data requests (CDRQ) through a tunnel (T) between the requesting client unit (CL) and the server unit (SERV).
**13)** A load balancer according to example 10), wherein said user field comprises at least an indication of a service run by a one of said server units (SERV).
**14)** A load balancer according to example 13), wherein said user field also comprises a client unit identification (ID).
**15)** A client unit (CL) of a data processing system (SYS) for providing content data from a plurality of server units (SERVm) to a plurality of client units (CLn) in response to content data requests (CDRQ), comprising:
   **a)** a content data request code section (RM) adapted to send a content data request including a user field requesting content data from a server unit from said client unit (CL) to a server unit (SERV) using a first communication protocol;
   **c)** a content data reception code section (CU-PM) for receiving said requested content data in response to said content data request (CDRQ) using said first communication protocol; wherein
   **d)** said content data request code section (RM) is adapted for encapsulating all content data requests of said first communication protocol in a second communication protocol setting up a fixed tunnel link (T) between said client unit and said server unit (SERV2); and
   **e)** said content data reception code section (CU-PM) is adapted for receiving all said content data of said first communication protocol encapsulated through a second communication protocol.
**16)** A server unit (SERV) of a data processing system (SYS) for providing content data to a plurality of client units (CLn) in response to content data requests (CDRQ) issued by said client units (CL), comprising:
   **a)** a request message reception code section (RMRU) for receiving a content data request requesting content data from said server unit from a load balancer (BAL) of said data processing system (SYS) which determines the current processing load at each server unit (SERVm), said load balancer distributing, in accordance with the determined processing load, said content data request to one of said server units (SERV) for having the content data retrieved from said server unit (SERV);
   **b)** a tunneling code section (TUN-SET) for maintaining a tunnel link (T) between said requesting client unit (CL) and said server unit (SERV);
   **c)** a content data providing code section (CD-PM) for providing said requested content data to said requesting client unit in response to said content data request (CDRQ); wherein
   **d)** said content data providing code section (CD-PU) is adapted for encapsulating all content data providing messages through said tunnel link (T) to said requesting client unit (SERV); and
   **e)** said content data request reception code section (RMRU) is adapted for receiving all said content data requests encapsulated through said tunnel link (T) from said requesting client unit (CL).
**17)** A server unit according to example 16),
   wherein said content data request received by said content data request reception code section (RMRU) includes in a user field a service indication indicating the service from which the content data is to provided and a client unit identification (CL-ID) indicating the requesting client unit (CL2).
**18)** A server unit according to example 16),
   wherein said content data request reception code section (RMRU) and said content data providing code section (CD-PM) are adapted for using a first communication protocol (portalconnect) and said tunneling code section (TUN-SET) is adapted to maintain said tunnel link (T) by using a second communication protocol (HTTP).
**19)** A server unit according to example 18),
   wherein said second communication protocol (HTTP) is HTTP.
**20)** A server unit (SERV) of a data processing system (SYS) for providing content data to a plurality of client units (CLn) in response to content data requests (CDRQ), comprising:
   **a)** a content data request message reception code section (RMRU) for receiving a content data request requesting content data from said server unit from a client unit (CU);
   **b)** a tunneling code section (TUN-SET) for maintaining a tunnel link (T) between said requesting client unit (CL) and said server unit (SERV);
   **c)** a content data providing code section (CD-PM) for providing said requested content data to said requesting client unit in response to said content data request (CDRQ); wherein
   **d)** said content data providing code section (CD-PU) is adapted for encapsulating all content data providing messages through said tunnel link (T) to said requesting client unit (SERV); and
   **e)** said content data request reception code section (RMRU) is adapted for receiving all said content data requests encapsulated through said tunnel link (T) from said requesting client unit (CL).
**21)** A server unit (SERV) according to example 20),
   wherein said content data request reception code section (RMRU) and said content data providing code section (CD-PM) are adapted for using a first communication protocol (portalconnect) and said tunneling code section (TUN-SET) is adapted to maintain said tunnel link (T) by using a second communication protocol (HTTP).
**22)** A server unit (SERV) of a data processing system (SYS) for providing content data to a plurality of client units (CLn) in response to content data requests (CDRQ), comprising:
   **a)** a content data request message reception code section (RMRU) for receiving a content data request requesting content data from said server unit from a client unit (CU);
   **b)** a tunneling code section (TUN-SET) for maintaining a tunnel link (T) between said requesting client unit (CL) and said server unit (SERV);
   **c)** a content data providing code section (CD-PM) for providing said requested content data to said requesting client unit in response to said content data request (CDRQ); wherein
   **d)** said content data request reception code section (RMRU) is adapted for receiving all content data requests of said first communication protocol encapsulated in a second communication protocol; and
   **e)** said content data providing code section (CD-PM) is adapted for providing all said content data providing messages of said first communication protocol encapsulated through said second communication protocol;
   **f)** said second communication protocol (HTTP) allowing a detection of the user field of the content data requests (CDRQ).
**23)** A server unit (SERV) of a data processing system (SYS) for providing content data to a plurality of client units (CLn) in response to content data requests (CDRQ), comprising:
   **a)** a content data request message reception code section (RMRU) for receiving a content data request requesting content data from said server unit from a client unit (CU) ;
   **b)** a tunneling code section (TUN-SET) for maintaining a tunnel link (T) between said requesting client unit (CL) and said server unit (SERV);
   **c)** a content data providing code section (CD-PM) for providing said requested content data to said requesting client unit in response to said content data request (CDRQ); wherein
   **d)** said content data request reception code section (RMRU) is adapted for receiving all content data requests encapsulated in a second communication protocol setting up a fixed tunnel link (T) between said client unit and said server unit (SERV2); and
   **e)** said content data providing code section (CU-PM) is adapted for providing all said content data messages of said first communication protocol encapsulated through a said second communication protocol.

### INDUSTRIAL APPLICABILITY

As described above with reference to Fig. 6b, the data processing system SYS, the client unit CL, the server unit SERV and the load balancer BAL of the examples of the invention provide a mechanism which allows that a message exchange between a requesting client unit and a providing server unit is made through a tunnel between the individual units. The use of this tunnel overrides the load balancer function which may however be used for other content data requests issued by other client units.

The afore mentioned functionalities may be advantageously used in a client unit, a load balancer and server unit which run a JAVA® (JAVA® is a registered trademark by Sun Microsystems) based processing software. However, any other processing software may also be used by a skilled person. Furthermore, some examples of the client units, server units and of the communication network CN were above described with reference to Fig. 6a. However, it should be noted that other types of client units, server units and communication networks may be used.

Furthermore, it should be noted that the invention can comprise further embodiments which result from a combination of features and/or operations which have been separately described and claimed in the description and claims. Furthermore, on the basis of the above teachings, a skilled person can carry out various modifications and variations and the scope of the invention should only be construed with reference to the attached claims.

Reference numerals in the claims only serve clarification purposes and do not limit the scope of the claims.

## Claims

1. A method for providing in a data processing system (SYS) content data from a plurality of server units (SERVm) to a plurality of client units (CLn) in response to content data requests (CDRQ), comprising the following operations:
a) sending (S1) content data requests (CDRQ) from said client units (CLn) to a load balancer (BAL) of said data processing system (SYS);
b) determining (S2) at said load balancer (BAL) the current processing load at each server unit (SERVm) ;
c) distributing (S3), by said load balancer (BAL), the content data requests (CDRQ) to the server units (SERVm), dependent on the determined processing loads;
d) retrieving content data by said server units (SERVm) in accordance with the distributed content data requests (CDRQ); and
e) forwarding the retrieved content data from said server units (SERVm) to the respective client units (CLn); wherein
f) when a client unit (CL2) sends a particular content data request (CDRQ) requesting content data to be provided by a service available at a server unit (SERV2), the following operations are carried out:
f1) setting up a direct tunnel (T) between said requesting client unit (CL2) and said server unit (SERV2) at which said service is available;
f2) forwarding all particular content data requests (CDRQ) from said client unit (CL2) requesting said content data from said service to said server unit (SERV2) encapsulated through said tunnel (T) without being distributed by said load balancer (BAL); and
f3) forwarding the content data provided by said service of said server unit (SERV2) to said requesting client unit (CL2) encapsulated through said tunnel (T).

2. A method according to claim 1,
wherein said content data request (CDRQ) includes in a user field a service indication indicating the service from which the content data is to be provided and a client unit identification (CL-ID) indicating the requesting client unit (CL2), wherein said load balancer (BAL) carries out an operation for determining from the service indication the server unit (SERV2) at which the requested service is available, and for forwarding said content data request (CDRQ) to said determined server unit (SERV2) independent from the determined processing load conditions.

3. A method according to claim 2,
wherein said load balancer (BAL) carries out an operation for setting up said tunnel (T) and for forwarding all subsequent content data requests having the same client unit identification (ID) and service indication directly to said server unit (SERV2) through the tunnel (T).

4. A method according to claim 1, comprising the operation of using a first communication protocol (portalconnect) for said content data request sending (CRD) and said content data provision operations and using a second communication protocol for setting up of said tunnel (T).

5. A method according to claim 4,
wherein said second communication protocol (HTTP) is HTTP.

6. A method according to claim 1,
wherein said content data request (CDRQ) is a special content data request (CDRQ) requesting special content data from a special service (SPEC) only available in said server unit (SERV2).

7. A load balancer (BAL) in a data processing system (SYS) for providing content data from a plurality of server units (SERVm) to a plurality of client units (CLn) in response to content data requests (CDRQ), comprising:
a) a load determining unit (LDET) for determining the processing load at the server units; and
b) a load distribution unit (DIST) for distributing content data requests from said plurality of client units (CL) to said plurality of server units (SERV) dependent on the processing loads of said individual server units (SERV), wherein
c) when a client unit (CL2) sends a particular content data request (CDRQ) requesting content data to be provided by a server unit (SERV2), a balancer control unit (BALC) switches off the load distribution unit (DIST) of said load balancer (BAL) for the content data request messages of said client unit (CL2) and all particular content data request messages of said client unit (CL2) are forwarded directly (T) to said server unit (SERV2) without undergoing load distribution at said load balancer (BAL).

8. A load balancer according to claim 7
wherein said load balancer (BAL) of said communication system (SYS) comprises a user field evaluation unit (EVAL) for detecting the user field of the content data requests (CDRQ).

9. A load balancer according to claim 7
wherein said content data request (CDRQ) is a special content data request (CDRQ) requesting special content data from a special service (SPEC) only available in said server unit.(SERV2).

10. A client unit (CL2) of a data processing system (SYS) for providing content data from a plurality of server units (SERVm) to a plurality of client units (CLn) in response to content data requests (CDRQ), comprising:
a) a content data request unit (RM) adapted to send a content data request (CDRQ) requesting content data from a server unit (SERVm) from said client unit (CL2) to a load balancer (BAL) of said data processing system (SYS) which determines the current processing load at each server unit (SERVm), said load balancer (BAL) distributing, in accordance with the determined processing load, said content data request (CDRQ) to one (SERV2) of said server units (SERVm) for having the content data retrieved from said server unit (SERV2);
b) a content data reception unit (CU-PM) for receiving said requested content data in response to said content data request (CDRQ);
c) a tunneling unit (TUN-SET) for maintaining a direct tunnel link (T) between said client unit (CL2) and said server unit (SERV2); wherein
d) said content data request unit (RM) is adapted for encapsulating all particular content data requests (CDRQ) requesting said content data to be provided from said server unit (SERV2) through said direct tunnel link (T) to said server unit (SERV2) without said particular content data requests (CDRQ) being distributed by said load balancer (BAL); and
e) said content data reception unit (CU-PM) is adapted for receiving all said content data encapsulated through said tunnel link (T) from said server unit (SERV2).

11. A client unit according to claim 10,
wherein said particular content data request (CDRQ) includes in a user field a service indication indicating the service from which the content data is to be provided and a client unit identification (CL-ID) indicating the requesting client unit (CL2).

12. A client unit according to claim 10 or 11,
wherein said content data request unit (RM) and said content data reception unit (CU-PM) are adapted for using a first communication protocol (portalconnect) and said tunneling unit (TUN-SET) is adapted to maintain said tunnel link (T) by using a second communication protocol (HTTP).

13. A client unit according to claim 12,
wherein said second communication protocol (HTTP) is HTTP.

14. A server unit (SERV) of a data processing system (SYS) for providing content data to a plurality of client units (CLn) in response to content data requests (CDRQ) issued by said client units (CLn), comprising:
a) a content data request reception unit (RMRU) for receiving a content data request requesting content data from said server unit from a load balancer (BAL) of said data processing system (SYS) which determines the current processing load at each server unit (SERVm), said load balancer (BAL) distributing, in accordance with the determined processing load, said content data request to one (SERV2) of said server units (SERV) for having the content data retrieved from said server unit (SERV2);
b) a content data providing unit (CD-PM) for providing said requested content data to said requesting client unit (CL2) in response to said content data request (CDRQ);
c) a tunneling unit (TUN-SET) for maintaining a direct tunnel link (T) between one (CL2) of said plurality of requesting client units (CLn) and said server unit (SERV2); wherein
d) said content data providing unit (CD-PM) is adapted for encapsulating all content data providing messages through said tunnel link (T) to said requesting client unit (CL2), when said content data request reception unit (RMRU) receives from said client unit (CL2) a particular content data request (CDRQ) requesting content data to be provided by said server unit (SERV2); and
e) said content data request reception unit (RMRU) is adapted for receiving all said particular content data requests (CDRQ) encapsulated through said direct tunnel link (T) from said requesting client unit (CL2) without said particular content data requests (CDRQ) being distributed by said load balancer (BAL).

15. A server unit according to claim 14,
wherein said particular content data request (CDRQ) received by said content data request reception unit (RMRU) includes in a user field a service indication indicating the service from which the content data is to be provided and a client unit identification (CL-ID) indicating the requesting client unit (CL2).

16. A server unit according to claim 14 or 15,
wherein said content data request reception unit (RMRU) and said content data providing unit (CD-PM) are adapted for using a first communication protocol (portalconnect) and said tunneling unit (TUN-SET) is adapted to maintain said tunnel link (T) by using a second communication protocol (HTTP).

17. A server unit according to claim 16,
wherein said second communication protocol (HTTP) is HTTP.

18. A computer program product stored on a computer readable storage medium to be executed on a processing section of a data processing system (SYS) comprising code sections adapted to carry out one or more of the method steps of any one or more of the method claims 1 to 6 or the functional features of the units of any one or more of the apparatus claims 7 to 17.

19. A program having instructions adapted to carry out in a data processing system (SYS) one or more of the method steps of any one or more of the method claims 1 to 6 or the functional features of the units of any one or more of the apparatus claims 7 to 17.

20. A data carrier having computer readable storage code embodied therein, comprising means adapted to carry out one or more of the method steps of any one or more of the method claims 1 to 6 or the functional features of the units of any one or more of the apparatus claims 7 to 17.

## Patentansprüche

1. Verfahren zum Bereitstellen von Inhaltsdaten von einer Vielzahl von Servereinheiten (SERVm) an eine Vielzahl von Clienteinheiten (CLn) in Reaktion auf Inhaltsdaten-Anfragen (CDRQ) in einem Daten-verarbeitenden System (SYS) mit den folgenden Operationen:
a) Senden (S1) von Inhaltsdaten-Anfragen (CDRQ) von den Clienteinheiten (CLn) an einen Lastausgleicher (BAL) des Daten-verarbeitenden Systems (SYS);
b) Bestimmen (S2) bei dem Lastausgleicher (BAL) der gegenwärtigen Bearbeitungslast bei jeder Servereinheit (SERVm);
c) Verteilen (S3) durch den Lastausgleicher (BAL) der Inhaltsdaten-Anfragen (CDRQ) an die Servereinheiten (SERVm) in Abhängigkeit der bestimmten Verarbeitungslasten;
d) Abrufen von Inhaltsdaten von den Servereinheiten (SERVm) gemäß den verteilten Inhaltsdaten-Anfragen (CDRQ); und
e) Weiterleiten der abgerufenen Inhaltsdaten von den Servereinheiten (SERVm) an die jeweiligen Clienteinheiten (CLn); wobei
f) wenn eine Clienteinheit (CL2) eine bestimmte Inhaltsdaten-Anfrage (CDRQ) sendet, die Inhaltsdaten anfordert, die von einem Dienst bereitgestellt werden sollen, der bei einer Servereinheit (SERV2) verfügbar ist, die folgenden Operationen ausgeführt werden:
f1) Aufbauen eines direkten Tunnels (T) zwischen der anfordernden Clienteinheiten (CL2) und der Servereinheit (SERV2), bei der der Dienst verfügbar ist;
f2) Weiterleiten aller bestimmten Inhaltsdaten-Anfragen (CDRQ) von der Clienteinheit (CL2), die die Inhaltsdaten von dem Dienst anfordert, an die Servereinheit (SERV2), die durch den Tunnel (T) eingekapselt ist, ohne durch den Lastausgleicher (BAL) verteilt zu werden; und
f3) Weiterleiten der Inhaltsdaten, die von dem Dienst der Servereinheit (SERV2) bereitgestellt werden, an die anfordernde Clienteinheit (CL2), die durch den Tunnel (T) eingekapselt sind.

2. Verfahren nach Anspruch 1, wobei die Inhaltsdaten-Anfrage (CDRQ) in einem Benutzerfeld eine Dienstanzeige einschließt, die den Dienst anzeigt, von dem die Inhaltsdaten bereitgestellt werden sollen und eine Clienteinheit-Identifizierung (CL-ID), die die anfordernde Clienteinheit (CL2) anzeigt, wobei der Lastausgleicher (BAL) eine Operation zum Bestimmen der Servereinheit (SERV2) aus der Dienstanzeige ausführt, bei der der angeforderte Dienst verfügbar ist und zum Weiterleiten der Inhaltsdaten-Anfrage (CDRQ) an die bestimmte Servereinheit (SERV2) unabhängig von den bestimmten Lastbedingungen.

3. Verfahren nach Anspruch 2, wobei der Lastausgleicher (BAL) eine Operation zum Aufbauen des Tunnels (T) und zum Weiterleiten aller nachfolgenden Inhaltsdaten-Anfragen mit der gleichen Clienteinheit-Identifizierung (ID) und Dienstanzeigen direkt an die Servereinheit (SERV2) durch den Tunnel (T) durchführt.

4. Verfahren nach Anspruch 1, mit der Operation eines Verwendens eines Kommunikationsprotokolls (Portalconnect) für das Senden von Inhaltsdaten-Anfragen (CRD) und den Inhaltsdaten-Bereitstellungsoperationen und Verwenden eines zweiten Kommunikationsprotokolls zum Aufbauen des Tunnels (T).

5. Verfahren nach Anspruch 4, wobei das zweite Kommunikationsprotokoll (HTTP) HTTP ist.

6. Verfahren nach Anspruch 1, wobei die Inhaltsdaten-Anfrage (CDRQ) eine bestimmte Inhaltsdaten-Anfrage (CDRQ) ist, die bestimmte Inhaltsdaten von einem bestimmten Dienst (SPEC) anfordert, der lediglich in der Servereinheit (SERV2) verfügbar ist.

7. Lastausgleicher (BAL) in einem Daten-verarbeitenden System (SYS) zum Bereitstellen von Inhaltsdaten von einer Vielzahl von Servereinheiten (SERVm) an eine Vielzahl von Clienteinheiten (CLn) in Reaktion auf Inhaltsdaten-Anfragen (CDRQ), mit:
a) einer Last-bestimmenden Einheit (LDET) zum Bestimmen der Verarbeitungslast bei den Servereinheiten; und
b) eine Lastverteilungseinheit (DIST) zum Verteilen von Inhaltsdaten-Anfragen von der Vielzahl von Clienteinheiten (CL) an die Vielzahl von Servereinheiten (SERV) in Abhängigkeit der Verarbeitungslasten der ersten Servereinheiten (SERV), wobei
c) wenn eine Clienteinheit (CL2) eine bestimmte Inhaltsdaten-Anfrage (CDRQ) sendet, die Inhaltsdaten anfordert, die von einer Servereinheit (SERV2) bereitgestellt werden sollen, eine Ausgleicher-Steuereinheit (BALC) die Lastverteilungseinheit (DIST) des Lastausgleichers (BAL) für die Inhaltsdaten-Anfragenachrichten der Clienteinheit (CL2) ausschaltet und alle bestimmten Inhaltsdaten-Anfragenachrichten der Clienteinheit (CL2) direkt (T) an die Servereinheit (SERV2) weitergeleitet werden, ohne einer Lastverteilung bei dem Lastausgleicher (BAL) zu unterliegen.

8. Lastausgleicher nach Anspruch 7, wobei der Lastausgleicher (BAL) des Kommunikationssystems (SYS) eine Benutzerfeld-Evaluationseinheit (EVAL) zum Detektieren des Benutzerfeldes der Inhaltsdaten-Anfragen (CDRQ) umfasst.

9. Lastausgleicher nach Anspruch 7, wobei die Inhaltsdaten-Anfrage (CDRQ) eine bestimmte Inhaltsdaten-Anfrage (CDRQ) ist, die bestimmte Inhaltsdaten von einem bestimmten Dienst (SPEC) anfordert, der lediglich in der Servereinheit (SERV2) verfügbar ist.

10. Clienteinheit (CL2) eines Daten-verarbeitenden Systems (SYS) zum Bereitstellen von Inhaltsdaten von einer Vielzahl von Servereinheiten (SERVm) an eine Vielzahl von Clienteinheiten (CLn) in Reaktion auf Inhaltsdaten-Anfragen (CDRQ) mit:
a) einer Inhaltsdaten-Anfrageeinheit (RM), die angepasst ist, eine Inhaltsdaten-Anfrage (CDRQ), die Inhaltsdaten von einer Servereinheit (SERVm) anfordert, von der Clienteinheit (CL2) an einen Lastausgleicher (BAL) des Daten-verarbeitenden Systems zu senden, der die gegenwärtige Verarbeitungslast bei jeder Servereinheit (SERVm) bestimmt, wobei der Lastausgleicher (BAL) gemäß der vorbestimmten Verarbeitungslast die Inhaltsdaten-Anfrage (CDRQ) an eine (SERV2) der Servereinheiten (SERVm) verteilt, um die Inhaltsdaten von der Servereinheit (SERV2) abrufen zu lassen;
b) eine Inhaltsdaten-Empfangseinheit (CU-PM) zum Empfangen der angeforderten Inhaltsdaten in Reaktion auf die Inhaltsdaten-Anfrage (CDRQ);
c) eine Tunneleinheit (TUN-SET) zum Aufrechterhalten einer direkten Tunnelverbindung (T) zwischen der Clienteinheit (CL2) und der Servereinheit (SERV2); wobei
d) die Inhaltsdaten-Anfrageeinheit (RM) angepasst zum Einkapseln aller bestimmten Inhaltsdaten-Anfragen (CDRQ) ist, die Inhaltsdaten anfordern, die von der Servereinheit (SERV2) durch die direkte Tunnelverbindung (T) an die Servereinheit (SERV2) bereitgestellt werden sollen, ohne dass die bestimmten Inhaltsdaten-Anfragen (CDRQ) von dem Lastausgleicher (BAL) verteilt werden; und
e) die Inhaltsdaten-Empfangseinheit (CU-PM) angepasst zum Empfangen aller Inhaltsdaten ist, die durch die Tunnelverbindung (T) von der Servereinheit (SERV2) eingekapselt sind.

11. Clienteinheit nach Anspruch 10, wobei die bestimmte Inhaltsdaten-Anfrage (CDRQ) in einem Benutzerfeld eine Dienstanzeige einschließt, die den Dienst anzeigt, von dem die Inhaltsdaten bereitgestellt werden sollen und eine Clienteinheit-Identifizierung (CL-ID), die die anfordernde Clienteinheit (CL2) anzeigt.

12. Clienteinheit nach Anspruch 10 oder 11, wobei die Inhaltsdaten-Anfrageeinheit (RM) und die Inhaltsdaten-Empfangseinheit (CU-PM) angepasst zum Verwenden eines ersten Kommunikationsprotokolls (Portalconnect) sind und die Tunneleinheit (TUN-SET) angepasst ist, die Tunnelverbindung (T) durch Verwenden eines zweiten Kommunikationsprotokolls (HTTP) aufrechtzuerhalten.

13. Clienteinheit nach Anspruch 12, wobei das zweite Kommunikationsprotokoll (HTTP) HTTP ist.

14. Servereinheit (SERV) eines Daten-verarbeitenden Systems (SYS) zum Bereitstellen von Inhaltsdaten an eine Vielzahl von Clienteinheiten (CLn) in Reaktion auf Inhaltsdaten-Anfragen (CDRQ), die von den Clienteinheiten (CLn) ausgegeben werden, mit:
a) einer Inhaltsdaten-Anfrage-Empfangseinheit (RMRU) zum Empfangen einer Inhaltsdaten-Anfrage, die Inhaltsdaten von der Servereinheit anfordert, von einem Lastausgleicher (BAL) des Daten verarbeitenden Systems (SYS), der die gegenwärtige Verarbeitungslast bei jeder Servereinheit (SERVm) bestimmt, wobei der Lastausgleicher (BAL) gemäß der bestimmten Verarbeitungslast die Inhaltsdaten-Anfrage an eine (SERV2) der Servereinheiten (SERV) verteilt, um die Inhaltsdaten von der Servereinheit (SERV2) Abrufen zu lassen;
b) eine Inhaltsdaten-bereitstellende Einheit (CD-PM) zum Bereitstellen der angeforderten Inhaltsdaten an die anfordernde Clienteinheit (CL2) in Reaktion auf die Inhaltsdaten-Anfrage (CDRQ);
c) eine Tunneleinheit (TUN-SET) zum Aufrechterhalten einer direkten Tunnelverbindung (T) zwischen einer (CL2) aus der Vielzahl der anfordernden Clienteinheiten (CLn) und einer Servereinheit (SERV2), wobei
d) die Inhaltsdaten-bereitstellende Einheit (CD-PM) angepasst zum Einkapseln aller Inhaltsdatenbereitstellenden Nachrichten durch die Tunnelverbindung (T) zu der anfordernden Clienteinheit (CL2) ist, wenn die Inhaltsdaten-Anfrage-Empfangseinheit (RMRU) von der Clienteinheit (CL2) eine bestimmte Inhaltsdaten-Anfrage (CDRQ) empfängt, die Inhaltsdaten anfordert, die von der Servereinheit (SERV2) bereitgestellt werden sollen; und
e) die Inhaltsdaten-Anfrage-Empfangseinheit (RMRU) angepasst zum Empfangen aller bestimmten Inhaltsdaten-Anfragen (CDRQ) ist, die durch die direkte Tunnelverbindung (T) von der anfordernden Clienteinheit (CL2) eingekapselt sind, ohne dass die bestimmten Inhaltsdaten-Anfragen (CDRQ) von dem Lastausgleicher (BAL) verteilt werden.

15. Servereinheit nach Anspruch 14, wobei die bestimmte Inhaltsdaten-Anfrage (CDRQ), die von der Inhaltsdaten-Anfrage-Empfangseinheit (RMRU) empfangen wird, in einem Benutzerfeld eine Dienstanzeige einschließt, die den Dienst anzeigt, von dem die Inhaltsdaten bereitgestellt werden sollen und eine Clienteinheit-Identifizierung (CL-ID), die die anfordernde Clienteinheit (CL2) anzeigt.

16. Servereinheit nach Anspruch 14 oder 15, wobei die Inhaltsdaten-Anfrage-Empfangseinheit (RMRU) und die Inhaltsdaten-bereitstellende Einheit (CD-PM) angepasst zum Verwenden eines ersten Kommunikationsprotokolls (Portalconnect) sind und die Tunneleinheit (TU-SET) angepasst ist, die Tunnelverbindung (T) durch Verwenden eines zweiten Kommunikationsprotokolls (HTTP) aufrechtzuerhalten.

17. Servereinheit nach Anspruch 16, wobei das zweite Kommunikationsprotokoll (HTTP) HTTP ist.

18. Computerprogrammprodukt, das auf einen Computer-lesbaren Speichermedium gespeichert ist, um auf einem Verarbeitungsabschnitt eines Daten-verarbeitenden Systems (SYS) ausgeführt zu werden, mit Codeabschnitten, die angepasst sind, einen oder mehrere der Verfahrensschritte irgendeines oder mehrerer der Verfahrensansprüche 1 bis 6 oder der Funktionsmerkmale der Einheiten eines oder mehrerer der Vorrichtungsansprüche 7 bis 17 auszuführen.

19. Programm mit Anweisungen, die angepasst sind, in einem Daten-verarbeitenden System (SYS) einen oder mehrere der Verfahrensschritte von einem oder mehreren der Verfahrensansprüche 1 bis 6 oder der Funktionsmerkmale der Einheiten von einem oder mehreren der Vorrichtungsansprüche 7 bis 17 auszuführen.

20. Datenträger mit einem Computer-lesbaren Speichercode, der darin verkörpert ist, mit einer Vorrichtung, die angepasst ist, einen oder mehrere der Verfahrensschritte von irgendeinem oder mehreren der Verfahrensansprüche 1 bis 6 oder der Funktionsmerkmale der Einheiten von irgendeinem oder mehreren der Vorrichtungsansprüche 7 bis 17 auszuführen.

## Revendications

1. Procédé pour fournir, dans un système de traitement de données (SYS), des données de contenu à partir d'une pluralité d'unités de serveur (SERVm) à une pluralité d'unités clientes (CLn) en réponse à des requêtes de données de contenu (CDRQ), comprenant les opérations suivantes:
a) l'envoi (S1) de requêtes de données de contenus (CDRQ) à partir desdites unités clientes (CLn) vers un répartiteur de charge (BAL) dudit système de traitement de données (SYS) ;
b) la détermination (S2), au niveau dudit répartiteur de charge (BAL), de la charge de traitement présente au niveau de chaque unité de serveur (SERVm) ;
c) la distribution (S3), au moyen dudit répartiteur de charge (BAL), des requêtes de données de contenu (CDRQ) aux unités de serveur (SERVm), en fonction des charges de traitement déterminées ;
d) la recherche des données de contenu au moyen desdites unités de serveur (SERVm) en conformité avec les requêtes de données de contenu réparties (CDRQ) ; et
e) la transmission des données de contenu recherchées à partir desdites unités de serveur (SERVm) aux unités clientes respectives (CLn) ; dans lequel
f) lorsqu'une unité cliente (CL2) envoie une requête de données de contenu particulière (CDRQ) requérant que des données de contenu soient fournies par un service disponible au niveau d'une unité de serveur (SERV2), les opérations suivantes sont effectuées :
f1) constitution d'un tunnel direct (T) entre ladite unité cliente (CL2) formulant la requête et ladite unité de serveur (SERV2) au niveau de laquelle ledit service est disponible ;
f2) transmission de toutes les requêtes de données de contenu particulières (CDRQ) à partir de ladite unité cliente (CL2) formulant auprès de ladite unité de serveur (SERV2) la requête desdites données de contenu à partir dudit service, les requêtes étant encapsulées à travers ledit tunnel (T) sans être réparties par ledit répartiteur de charge (BAL) ; et
f3) transmission des données de contenu fournies par ledit service de ladite unité de serveur (SERV2) à ladite unité cliente (CL2) formulant la requête, les données étant encapsulées à travers ledit tunnel (T).

2. Procédé selon la revendication 1,
dans lequel ladite requête de données de contenu (CDRQ) comprend dans un champ d'utilisateur une indication de service indiquant le service à partir duquel les données de contenu peuvent être obtenues et une identification d'unité cliente (CL-ID) indiquant l'unité cliente (CL2) formulant la requête, dans lequel ledit répartiteur de charge (BAL) effectue une opération destinée à déterminer à partir de l'indication de service l'unité de serveur (SERV2) au niveau de laquelle le service requis est disponible, et à transmettre ladite requête de données de contenu (CDRQ) à ladite unité de serveur déterminée (SERV2) indépendamment des conditions de charge de traitement déterminées.

3. Procédé selon la revendication 2,
dans lequel ledit répartiteur de charge (BAL) effectue une opération destinée à constituer ledit tunnel (T) et à transmettre toutes les requêtes de données de contenu suivantes ayant la même identification d'unité cliente (ID) et la même indication de service directement à ladite unité de serveur (SERV2) à travers ledit tunnel (T).

4. Procédé selon la revendication 1, comprenant l'opération qui consiste à utiliser un premier protocole de communication (connexion à un portail) pour ledit envoi (CRD) des requêtes de données de contenu et lesdites opérations de fourniture des données de contenu et à utiliser un second protocole de communication pour la constitution dudit tunnel (T).

5. Procédé selon la revendication 4,
dans lequel ledit second protocole de communication (HTTP) est HTTP.

6. Procédé selon la revendication 1,
dans lequel ladite requête de données de contenu (CDRQ) est une requête de données de contenu spéciale (CDRQ) requérant des données de contenu spéciales à partir d'un service spécial (SPEC) disponible seulement dans ladite unité de serveur (SERV2).

7. Répartiteur de charge (BAL) prévu dans un système de traitement de données (SYS) destiné à fournir des données de contenu à partir d'une pluralité d'unités de serveur (SERVm) à une pluralité d'unités clientes (CLn) en réponse à des requêtes de données de contenu (CDRQ), comprenant :
a) une unité de détermination de charge (LDET) pour déterminer la charge de traitement au niveau des unités de serveur ; et
b) une unité de répartition de charge (DIST) pour distribuer des requêtes de données de contenu provenant de ladite pluralité d'unités clientes (CL) à ladite pluralité d'unités de serveur (SERV) en fonction des charges de traitement desdites unités de serveur individuelles (SERV), dans lequel
c) lorsqu'une unité cliente (CL2) envoie une requête de données de contenu particulière (CDRQ) requérant que des données de contenu soient fournies par une unité de serveur (SERV2), une unité de contrôle du répartiteur (BALC) déconnecte l'unité de répartition de charge (DIST) dudit répartiteur de charge (BAL) pour les messages de requête de données de contenu de ladite unité cliente (CL2) et tous les messages particuliers de requête de données de contenu de ladite unité cliente (CL2) sont transmis directement (T) à ladite unité de serveur (SERV2) sans subir de distribution de charge au niveau dudit répartiteur de charge (BAL).

8. Répartiteur de charge selon la revendication 7,
ledit répartiteur de charge (BAL) dudit système de communication (SYS) comprenant une unité d'évaluation de champ d'utilisateur (EVAL) pour détecter le champ d'utilisateur des requêtes de données de contenu (CDRQ).

9. Répartiteur de charge selon la revendication 7,
dans lequel ladite requête de données de contenu (CDRQ) est une requête de données de contenu spéciale (CDRQ) requérant des données de contenu spéciales à partir d'un service spécial (SPEC) disponible seulement dans ladite unité de serveur (SERV2).

10. Unité cliente (CL2) d'un système de traitement de données (SYS) destiné à fournir des données de contenu à partir d'une pluralité d'unités de serveur (SERVm) à une pluralité d'unités clientes (CLn) en réponse à des requêtes de données de contenu (CDRQ), comprenant :
a) une unité de requête de données de contenu (RM) adaptée pour envoyer une requête de données de contenu (CDRQ), formulant une requête de données de contenu auprès d'une unité de serveur (SERVm) à partir de ladite unité cliente (CL2), à un répartiteur de charge (BAL) dudit système de traitement de données (SYS) qui détermine la charge de traitement présente au niveau de chaque unité de serveur (SERVm), ledit répartiteur de charge (BAL) distribuant, en conformité avec la charge de traitement déterminée, ladite requête de données de contenu (CDRQ) à l'une (SERV2) desdites unités de serveur (SERVm) en vue de la recherche des données de contenu à partir de ladite unité de serveur (SERV2) ;
b) une unité de réception de données de contenu (CU-PM) pour la réception desdites données de contenu requises en réponse à ladite requête de données de contenu (CDRQ) ;
c) une unité de constitution de tunnel (TUN-SET) pour maintenir une liaison de tunnel directe (T) entre ladite unité cliente (CL2) et ladite unité de serveur (SERV2) ; dans laquelle
d) ladite unité de requête de données de contenu (RM) est adaptée pour encapsuler toutes les requêtes de données de contenu particulières (CDRQ), requérant auprès de ladite unité de serveur (SERV2) la fourniture desdites données de contenu à travers ladite liaison de tunnel directe (T), à destination de ladite unité de serveur (SERV2) sans que ledites requêtes de données de contenu particulières (CDRQ) soient distribuées par ledit répartiteur de charge (BAL) ; et
e) ladite unité de réception de données de contenu (CU-PM) est adaptée pour recevoir toutes lesdites données de contenu encapsulées à travers ladite liaison de tunnel (T) et provenant de ladite unité de serveur (SERV2).

11. Unité cliente selon la revendication 10,
dans laquelle ladite requête de données de contenu particulière (CDRQ) inclut dans un champ d'utilisateur une indication de service indiquant le service à partir duquel les données de contenu peuvent être fournies et une identification d'unité cliente (CL-ID) indiquant l'unité cliente (CL2) formulant la requête.

12. Unité cliente selon la revendication 10 ou 11,
dans laquelle ladite unité de requête de données de contenu (RM) et ladite unité de réception de données de contenu (CU-PM) sont adaptées pour utiliser un premier protocole de communication (connexion à un portail) et ladite unité de constitution de tunnel (TUN-SET) est adaptée pour maintenir ladite liaison de tunnel (T) par utilisation d'un second protocole de communication (HTTP).

13. Unité cliente selon la revendication 12,
dans laquelle ledit second protocole de communication (HTTP) est HTTP.

14. Unité de serveur (SERV) d'un système de traitement de données (SYS) destiné à fournir des données de contenu à une pluralité d'unités clientes (CLn) en réponse à des requêtes de données de contenu (CDRQ) émises par lesdites unités clientes (CLn), comprenant :
a) une unité de réception de requêtes de données de contenu (RMRU) pour recevoir une requête de données de contenu, formulant une requête de données de contenu auprès de ladite unité de serveur, à partir d'un répartiteur de charge (BAL) dudit système de traitement de données (SYS) qui détermine la charge de traitement présente au niveau de chaque unité de serveur (SERVm), ledit répartiteur de charge (BAL) distribuant, en conformité avec la charge de traitement déterminée, ladite requête de données de contenu à l'une (SERV2) desdites unités de serveur (SERV) en vue de la recherche des données de contenu à partir de ladite unité de serveur (SERV2) ;
b) une unité de fourniture de données de contenu (CD-PM) pour fournir lesdites données de contenu requises à ladite unité cliente (CL2) formulant la requête, en réponse à ladite requête de données de contenu (CDRQ) ;
c) une unité de constitution de tunnel (TUN-SET) pour maintenir une liaison de tunnel directe (T) entre l'une (CL2) de ladite pluralité d'unités clientes (CLn) formulant une requête -et ladite unité de serveur (SERV2) ; dans laquelle
d) ladite unité de fourniture de données de contenu (CD-PM) est adaptée pour encapsuler tous les messages fournissant des données de contenu à travers ladite liaison de tunnel (T) à ladite unité cliente (CL2) formulant une requête, lorsque ladite unité de réception de requête de données de contenu (RMRU) reçoit de ladite unité cliente (CL2) une requête de données de contenu particulière (CDRQ) requérant la fourniture de données de contenu par ladite unité de serveur (SERV2) ; et
e) ladite unité de réception de requête de données de contenu (RMRU) est adaptée pour recevoir de ladite unité cliente (CL2) ayant formulé une requête toutes lesdites requêtes de données de contenu particulières (CDRQ) encapsulées à travers ladite liaison de tunnel directe (T) sans que lesdites requêtes de données de contenu particulières (CDRQ) soient distribuées par ledit répartiteur de charge (BAL).

15. Unité de serveur selon la revendication 14,
dans laquelle ladite requête de données de contenu particulière (CDRQ) reçue par ladite unité de réception de requête de données de contenu (RMRU) inclut dans un champ d'utilisateur une indication de service indiquant le service à partir duquel les données de contenu peuvent être fournies et une identification d'unité cliente (CL-ID) indiquant l'unité cliente (CL2) formulant une requête.

16. Unité de serveur selon la revendication 14 ou 15,
dans laquelle ladite unité de réception de requête de données de contenu (RMRU) et ladite unité de fourniture de données de contenu (CD-PM) sont adaptées pour utiliser un premier protocole de communication (connexion à un portail) et ladite unité de constitution de tunnel (TUN-SET) est adaptée pour maintenir ladite liaison de tunnel (T) par utilisation d'un second protocole de communication (HTTP).

17. Unité de serveur selon la revendication 16,
dans laquelle ledit second protocole de communication (HTTP) est HTTP.

18. Produit programme informatique stocké sur un support de stockage lisible par ordinateur destiné à être exécuté dans la partie de traitement d'un système de traitement de données (SYS) comprenant des parties de codes adaptées pour effectuer une ou plusieurs des étapes du procédé selon l'une quelconque ou plusieurs des revendications de procédé 1 à 6 ou les caractéristiques fonctionnelles des unités selon l'une quelconque ou plusieurs des revendications d'appareil 7 à 17.

19. Programme comprenant des instructions adaptées pour effectuer dans un système de traitement de données (SYS) une ou plusieurs des étapes de procédé selon l'une quelconque ou plusieurs des revendications de procédé 1 à 6 ou les caractéristiques fonctionnelles des unités selon l'une quelconque ou plusieurs des revendications d'appareil 7 à 17.

20. Support de données dans lequel sont incorporés des codes de stockage lisibles par ordinateur, comprenant des moyens adaptés pour effectuer une ou plusieurs des étapes de procédé selon l'une quelconque ou plusieurs des revendications de procédé 1 à 6 ou les caractéristiques fonctionnelles des unités selon l'une quelconque ou plusieurs des revendications d'appareil 7 à 17.
